(19) Europäisches Patentamt
European Patent Office
Office européen des brevets

(11) **EP 2 489 863 A1**

(12) **EUROPEAN PATENT APPLICATION**
published in accordance with Art. 153(4) EPC

(43) Date of publication:
**22.08.2012 Bulletin 2012/34**

(51) Int Cl.:
*F02D 41/04* $^{(2006.01)}$  *B01D 53/94* $^{(2006.01)}$
*F01N 3/02* $^{(2006.01)}$  *F01N 3/24* $^{(2006.01)}$
*F02D 43/00* $^{(2006.01)}$

(21) Application number: **10823377.6**

(22) Date of filing: **12.10.2010**

(86) International application number:
**PCT/JP2010/067861**

(87) International publication number:
**WO 2011/046109 (21.04.2011 Gazette 2011/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2009 JP 2009236022**

(71) Applicant: **Nissan Motor Co., Ltd.
Yokohama-shi, Kanagawa 221-0023 (JP)**

(72) Inventor: **YAMAMOTO, Risa
Kanagawa 243-0123 (JP)**

(74) Representative: **Grünecker, Kinkeldey,
Stockmair & Schwanhäusser
Leopoldstrasse 4
80802 München (DE)**

(54) **EXHAUST PURIFICATION DEVICE FOR AN INTERNAL COMBUSTION ENGINE**

(57)  In order to regenerate an NOx trap catalyst 11 under rich spike control, an ECU 15 calculates an extent of a predicted temperature increase $\Delta T\_LNThos2$ at the NOx trap catalyst 11 undergoing regeneration based upon operating conditions an internal combustion engine 1, a degree of opening of an intake throttle 7 and control parameters $t\lambda 1$, $t\lambda 2$ pertaining to post-injection via a fuel injector 4. Catalyst temperature control corresponding to any change in the operating conditions of the internal combustion engine 1, occurring while regeneration of the NOx trap catalyst 11 is in progress, is achieved by adjusting values taken for the control parameters $t\lambda 1$, $t\lambda 2$ if the predicted temperature rise $\Delta T\_LNThos2$ is beyond an allowable range $\Delta T\_LNT\_cap$.

FIG. 7

**Description**

FIELD OF THE INVENTION

This invention relates to temperature control for an exhaust gas purification catalyst used to purify exhaust gas from an internal combustion engine.

BACKGROUND OF THE INVENTION

JP 2002-479074A, published by the Japan Patent Office in 2002, discloses an exhaust gas purification device that adsorbs nitrogen oxide (NOx) discharged from a diesel engine or a gasoline engine with a NOx trap catalyst during lean burning operation and renders the NOx thus adsorbed into a reduced form through desorption of the accumulated NOx under rich spike control once a predetermined quantity of nitrogen oxides has been adsorbed. Under rich spike control, the excess air factor $\lambda$ of the exhaust gas is temporarily lowered. The processing executed to reduce the NOx having been adsorbed into the NOx trap catalyst by desorbing the NOx from the NOx trap catalyst will be referred to as regeneration of the NOx trap catalyst.

The NOx purification rate of this type of NOx trap catalyst rises as the temperature of the catalyst increases under rich spike control until the maximum NOx purification rate is achieved at a specific catalyst temperature. As the catalyst temperature further rises beyond the specific temperature, the NOx purification rate decreases.

According to the prior art described above, a rich spike is achieved by calculating a post-injection amount at which the catalyst temperature does not rise beyond a catalyst temperature range assuring a desirable NOx purification rate and executing post-injection at the post-injection amount thus calculated. The term "post-injection" is used to refer to additional fuel injection executed following the regular fuel injection within the same combustion cycle.

SUMMARY OF THE INVENTION

The conditions under which an internal combustion engine installed in a vehicle operates may change significantly as the conditions in the environment in which the vehicle travels change.

If the internal combustion engine operating conditions change abruptly and the fuel injection quantity changes accordingly under rich spike control executed based upon the post-injection amount determined based upon the catalyst temperature at the start of the rich spike control, the temperature of the catalyst may increase with an unexpected pattern. In such a case, the optimal catalyst temperature may not be achieved, which, in turn, may adversely affect the catalyst or prevent full catalyst regeneration.

It is therefore an object of this invention to achieve optimal temperature control for an exhaust gas purification material, such as a NOx trap catalyst, by reflecting any change in the operating conditions of the internal combustion engine that may occur while regenerating the exhaust gas purification material.

In order to achieve the above object, this invention provides an exhaust gas purification material regenerating device used to regenerate an exhaust gas purification material that traps a specific component included in exhaust gas from an internal combustion engine, comprising an excess air factor altering mechanism for altering an excess air factor in the internal combustion engine, operating condition detection sensors that detect operating conditions in the internal combustion engine and a programmable controller. The exhaust gas purification material is regenerated by desorbing the specific component in correspondence to a change in the excess air factor. The controller is programmed to regenerate the exhaust gas purification material by controlling the excess air factor altering mechanism based upon control parameters, calculate a predicted temperature increase at the exhaust gas purification material undergoing regeneration based upon the operating conditions in the internal combustion engine and the control parameters, determine whether or not the predicted temperature increase is beyond a predetermined allowable range, and alter a value taken for the control parameter if the predicted temperature increase is determined to be beyond the allowable range.

The details as well as other features and advantages of this invention are set forth in the remainder of the specification and are shown in the accompanying drawings.

BRIEF DESCRIPTION OF THE DRAWINGS

FIG. 1 is a schematic diagram of an exhaust gas purification device for an internal combustion engine according to a first embodiment of this invention.

FIG. 2 is a block diagram for describing a calculation logic adopted by an engine control unit (ECU) provided in the exhaust gas purification device to calculate a NOx trap catalyst bed temperature.

FIG. 3 is a block diagram for describing a calculation logic adopted by the ECU to calculate an estimated DPF bed temperature *T_DPFbed2.*

FIG. 4 is a diagram showing a characteristic of a map of a target excess air factor $t\lambda 1$ to be achieved entirely through operation of an air intake throttle and a target excess air factor $t\lambda 2$ to be achieved through a combination of the operation of the air intake throttle and a post-injection, which is stored in the ECU.

FIG. 5 is a diagram showing a characteristic of a map of a post temperature correction coefficient base value *Khos2_base,* which is stored in the ECU.

FIG. 6 is a diagram showing a characteristic of a map of a reference rich spike time period *Time_base*, which is stored in the ECU.

FIG. 7 is a flowchart describing a rich spike control routine executed by the ECU.

FIG. 8 is a flowchart describing a subroutine for calculating an LNT operating condition correction temperature increase value $\triangle T\_LNThos1$ executed by the ECU.

FIG. 9 is a flowchart describing a subroutine for calculating a post-correction temperature increase value $\triangle T\_LNThos2$ executed by the ECU.

FIG. 10 is a diagram showing a characteristic of a change occurring in a purification rate $\eta NOx$ relative to the NOx trap catalyst bed temperature.

FIG. 11 is a diagram showing a characteristic of a map of a NOx trap catalyst reference temperature increase value $\triangle T\_LNT\_base$, which is stored in the ECU.

FIG. 12 is a diagram showing a characteristic of a map of a correction coefficient *Khos1* determined based upon operating conditions of an internal combustion engine.

FIG. 13 is a diagram indicating changes in the hydrocarbon (HC) purification rate and the carbon monoxide (CO) purification rate relative to the NOx trap catalyst bed temperature.

FIG. 14 is a diagram showing a characteristic of a map for resetting the target excess air factor $t\lambda 2$, which is stored in the ECU according to a second embodiment of this invention.

FIG. 15 is a diagram showing a characteristic of a map for resetting of the rich spike time period, which is stored in the ECU according to the second embodiment of this invention.

DESCRIPTION OF THE PREFERRED EMBODIMENTS

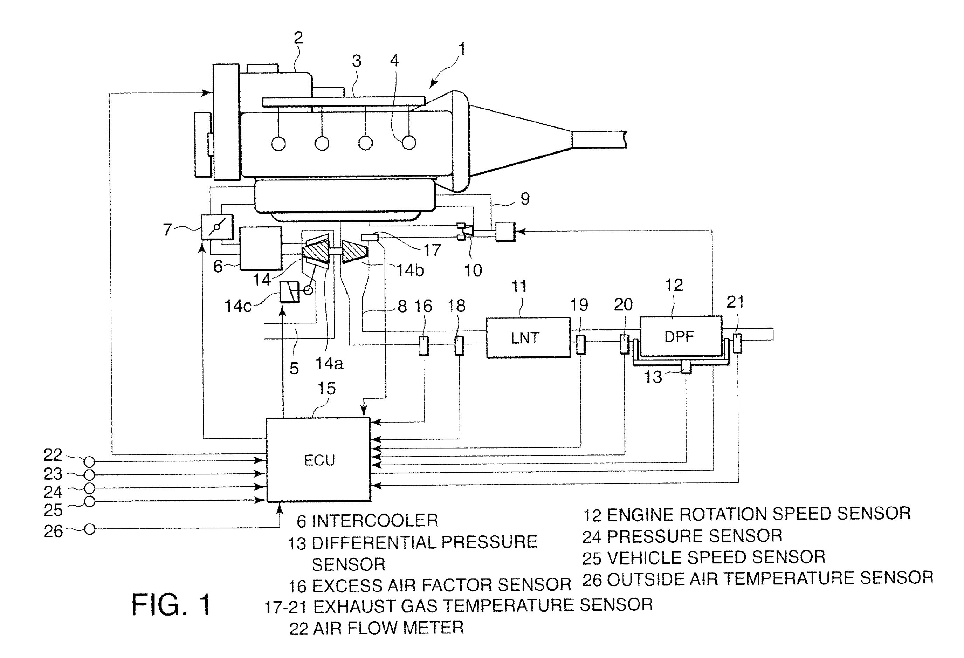

Referring to FIG. 1 of the drawings, an internal combustion engine 1 is a diesel engine equipped with a common rail fuel injection system comprising a fuel pump 2, a common rail 3 and a fuel injector 4.

The internal combustion engine 1 comprises an air intake pipe 5 and an exhaust pipe 8. In the air intake pipe 5, an air intake throttle 7 and an intercooler 6 are disposed in this order toward the upstream side along the airflow taken into the internal combustion engine 1. Air taken into the air intake pipe 5 is first cooled at the intercooler 6 so as to improve the intake air charging efficiency and is then supplied to the internal combustion engine 1 through the air intake throttle 7.

The internal combustion engine 1 is operated by burning a fuel mixture containing the air taken in through the air intake pipe 5 and fuel injected via the fuel injector 4 in a combustion chamber. The post-combustion exhaust gas is discharged to the exhaust pipe 8. Part of the exhaust gas is recirculated to the combustion chamber of the internal combustion engine 1 through an exhaust gas recirculation (EGR) pipe 9. An EGR valve 10, via which the quantity of exhaust gas recirculation is controlled, is disposed at the EGR pipe 9.

At the discharge pipe 8, a nitrogen oxide (NOx) trap catalyst 11 (hereinafter referred to as an LNT 11) and a diesel particulate filter 12 (hereinafter referred to as a DPF 12) at which particulates in the exhaust gas are trapped, set apart from each other, are disposed in this order toward the downstream side along the exhaust gas flow. NOx in the exhaust gas generated while the internal combustion engine 1 is engaged in lean burning operation is trapped at the LNT 11. The LNT 11 having trapped NOx in a predetermined quantity needs to be regenerated by desorbing the NOx in a reduced form from the LNT 11. The LNT 11 is regenerated under rich spike control for enriching the exhaust gas composition by reducing the excess air factor $\lambda$ in the exhaust gas. The exhaust gas excess air factor $\lambda$ is a numerical value indicating the oxygen concentration in the exhaust gas.

At the DPF 12, particulates in the exhaust gas generated as the internal combustion engine 1 is operated, are trapped. When the quantity of particulates trapped at the DPF 12 reaches a predetermined level, the exhaust gas temperature is raised to burn the particulates and the particulates are thus removed from the DPF 12. This processing will be referred to as regeneration of the DPF 12. An oxidation catalyst that oxidizes hydrocarbons (HC) and carbon monoxide (CO) in the exhaust gas is held at a catalyst support constituted of ceramic or metal, at the DPF 12.

The internal combustion engine 1 further comprises a turbo charger 14 constituted by a compressor 14a and an exhaust gas turbine 14b. The compressor 14a is mounted at the air intake pipe 5 upstream of the intercooler 6 along the intake air flow. The exhaust gas turbine 14b is mounted at the exhaust pipe 8 upstream of the LNT 11 along the exhaust gas flow. The exhaust gas turbine 14b, caused to rotate by the flow of the exhaust gas from the internal combustion engine 1, rotates the compressor 14a, directly and coaxially connected thereto, so as to compress the air taken into the air intake pipe 5 and supercharge the air into the internal combustion engine 1. The supercharging pressure at the turbo charger 14 is adjusted by a supercharging pressure control actuator 14c.

Regeneration of the LNT 11 and regeneration of the DPF 12 are both controlled by an engine control unit 15 (hereinafter referred to as an ECU 15).

The ECU 15 is constituted by a microcomputer comprising a central processing unit (CPU), a read-only memory (ROM), a random access memory (RAM), and an input/output interface (I/O interface). The ECU 15 may be constituted by a plurality of microcomputers.

In order to control the regeneration of the LNT 11 and the DPF 12, various types of sensors are connected to the ECU 15.

A differential pressure detection passage that bypasses the DPF 12 and a differential pressure sensor 13 are disposed so as to detect a pressure loss $\Delta P$ at the DPF 12, i.e., the pressure difference between the pressure on the upstream side and the pressure on the downstream side of the DPF 12. The pressure loss $\Delta P$ at the DPF 12, detected by the differential pressure sensor 13, is input as a signal to the ECU 15. The ECU 15 compares the pressure loss $\Delta P$ with a regeneration start criterion value and determines whether or not to start regenerating the DPF 12. Upon determining that regeneration is to start, the ECU 15 raises the temperature of the exhaust gas from the internal combustion engine 1 so as to burn the particulates having been trapped at the DPF 12. The exhaust gas temperature can be raised by retarding the injection timing so as to inject fuel via the fuel injector 4 later relative to the normal injection timing or by executing an additional post-injection following the regular injection.

While the regeneration processing, executed to regenerate the DPF 12, is underway, the ECU 15 compares the pressure loss $\Delta P$ with a regeneration end criterion value and determines whether or not to end the regeneration. Upon determining that the regeneration is to end, the ECU 15 ends the regeneration processing executed for the DPF 12.

At the exhaust pipe 8, an exhaust gas temperature sensor 20, which detects an entrance temperature at the DPF 12 and an exhaust gas temperature sensor 21, which detects an exit temperature at the DPF 12, are disposed at positions respectively to the front of and to the rear of the DPF 12. An excess air factor sensor 16 and an exhaust gas temperature sensor 18 are disposed at positions upstream of the LNT 11 at the exhaust pipe 8. An exhaust gas temperature sensor 19 is disposed at the exhaust pipe 8 at a position downstream of the LNT 11. In addition, an exhaust gas temperature sensor 17 is disposed at the exhaust pipe upstream of the exhaust gas turbine 14b of the turbo charger 14.

Detection data provided from the excess air factor sensor 16 and the exhaust gas temperature sensors 17, 18, 19, 20 and 21 are individually input as signals to the ECU 15.

Detection data provided by sensors installed to detect operating conditions of the internal combustion engine 1, including an air flow meter 22 that detects an intake air flow rate $Qac$ at the internal combustion engine 1, an 23, a pressure sensor 24 that detects an entrance pressure at the exhaust gas turbine 14b of the turbocharger 14, a vehicle speed sensor 25 that detects a vehicle traveling speed $SPD$ and an outside air temperature sensor 26 that detects an outside air temperature $THA$, are individually input as signals to the ECU 15.

The ECU 15 executes regeneration control for the LNT 11 and the DPF 12 by outputting signals to the common rail fuel injection system, the air intake throttle 7, the EGR valve 10 and the supercharging pressure control actuator 14c. As part of this control, the ECU 15 predicts a change to occur in a bed temperature at the LNT 11 and a change to occur in a bed temperature at the DPF 12 under the regeneration control.

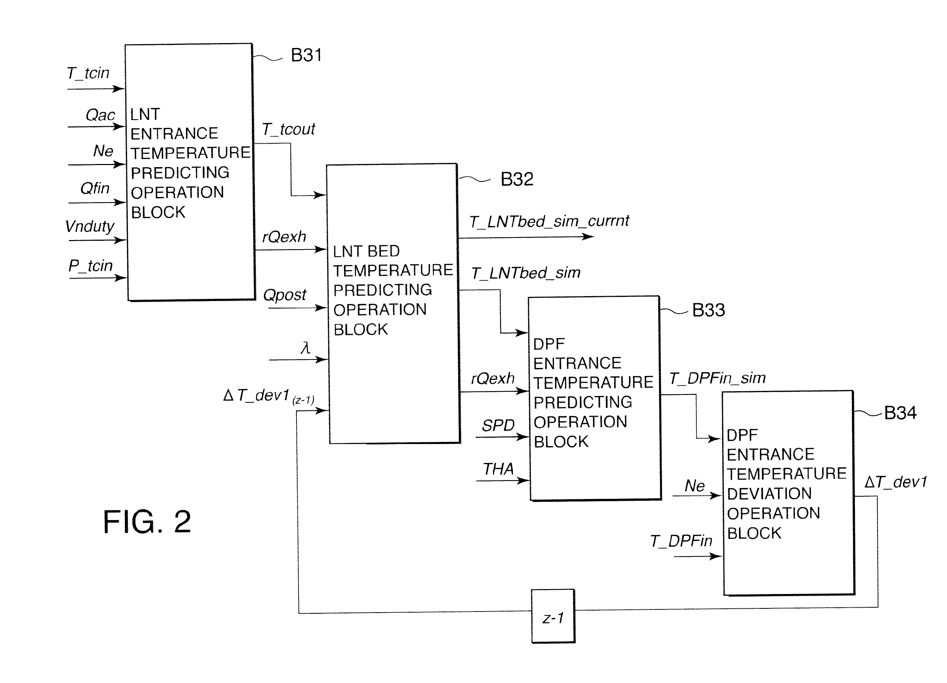

Referring to FIG. 2, a calculation logic adopted by the ECU 15 when it calculates a predicted bed temperature value for the LNT 11 is described. Processing is executed based upon this calculation logic repeatedly over constant cycles, e.g., over 20-millisecond cycles.

As functional blocks related to this calculation logic, the ECU 15 includes an LNT entrance temperature predicting operation block B31, an LNT bed temperature predicting operation block B32, a DPF entrance temperature predicting operation block B33 and a DPF entrance temperature deviation operation block B34. It is to be noted that these blocks are all virtual units representing the various functions of the ECU 15 and they do not have any physical presence.

The LNT entrance temperature predicting operation block B31 predicts an exit temperature $T\_tcout$ at the exhaust gas turbine 14b of the turbocharger 14, which changes as the operating conditions of the internal combustion engine 1 change, based upon a temperature detection value $T\_tcin$ provided by the exhaust gas temperature sensor 17 located on the upstream side of the exhaust gas turbine 14b and the work energy at the turbocharger 14.

In order to enable the predicting operation, the entrance temperature $T\_tcin$ at the exhaust gas turbine 14b, detected by the exhaust gas temperature sensor 17, the intake air flow rate $Qac$ detected at the air flow meter 22, an engine rotation speed $Ne$ detected by the engine rotation speed sensor 23, a fuel injection quantity $Qfin$ indicating the quantity of fuel injected via the fuel injector 4, a turbo nozzle opening degree $Vnduty$ and an entrance pressure $P\_tcin$ at the exhaust gas turbine 14b, detected by the pressure sensor 24, are input to the LNT entrance temperature predicting operation block B31.

The fuel injection quantity $Qfin$ is a value controlled by the ECU 15 via the common rail fuel injection system, whereas the turbo nozzle opening degree $Vnduty$ is a value controlled by the ECU 15 via the supercharging pressure control actuator 14c. This means that the fuel injection quantity $Qfin$ and the turbo nozzle opening degree $Vnduty$ are values known to the ECU 15.

In the LNT entrance temperature predicting operation block B31, the ECU 15 calculates a phase delay *rQexh*, attributable to passage of exhaust gas through the exhaust gas turbine 14b, based upon the exhaust gas flow rate. Concurrently, the ECU 15 calculates the predicted exhaust gas turbine exit temperature value *T_tcout* by calculating the work energy attributable to the turbocharger 14 based upon the exhaust gas flow rate and the turbo work efficiency and then subtracting a temperature equivalent to the work energy from the temperature detection value *T_tcin* provided by the exhaust gas temperature sensor 17. The exhaust gas flow rate can be calculated in correspondence to the intake air flow rate Qac. The turbo work efficiency can be calculated in correspondence to the turbo nozzle opening degree *Vnduty.*

In the LNT bed temperature predicting operation block B32, the ECU 15 calculates a predicted LNT bed temperature value *T_LNTbed_sim_current* corresponding to the predicted exhaust gas turbine exit temperature value *T_tcout*, In order to enable the predicting operation, a post-injection amount Qpost and the excess air factor $\lambda$ are input to the LNT bed temperature predicting operation block B32. These data pertain to a reductant that causes a temperature increase through oxidation reaction at the LNT 11.

In the LNT bed temperature predicting operation block B32, the ECU 15 calculates a phase delay *rQexh* pertaining to the bed temperature at the LNT 11 based upon the exhaust gas flow rate. Concurrently, the ECU 15 determines through arithmetic operation a bed temperature tentative value *T_LNTbed_sim* for the LNT 11 based upon the predicted exhaust gas turbine exit temperature value *T_tcout* reflecting the phase delay *rQexh* and the oxidation reaction heat generated at the LNT 11, which is attributable to the post-injection amount *Qpost* and the excess air factor $\lambda$.

A feedback correction value $\Delta T\_dev1_{(z-1)}$, having been calculated at the time of the previous process execution, is input to the LNT bed temperature predicting operation block B32. In the LNT bed temperature predicting operation block B32, the ECU 15 calculates a highly accurate predicted bed temperature value *T_LNTbed_sim_current* by correcting the predicted bed temperature tentative value *T_LNTbed_sim* based upon the feedback correction value $\Delta T\_dev1_{(z-1)}$.

In the DPF entrance temperature predicting operation block B33, the ECU 15 calculates a predicted DPF entrance temperature value *T_DPFin_sim* based upon the predicted bed temperature tentative value *T_LNTbed_sim* having been ascertained for the LNT 11. The LNT 11 and the DPF 12, disposed at positions set apart from each other along the direction running to the front end to the rear of the vehicle, are connected via the exhaust pipe 8 and thus, the exhaust gas is cooled with the outside air as it travels from the exit of the LNT 11 through the exhaust pipe 8 to reach the DPF 12. In order to allow the DPF entrance temperature predicting operation block B33 to calculate the predicted DPF entrance temperature value *T_DPFin_sim* by taking into consideration the cooling effect, the vehicle speed *SPD* detected by the vehicle speed sensor 25 and the outside air temperature *THA* detected by the outside air temperature sensor 26 are input as data related to the extent of heat discharge to the DPF entrance temperature predicting operation block B33. The ECU 15 calculates the predicted DPF entrance temperature value *T_DPFin_sim* reflecting the extent of heat discharge based upon the predicted bed temperature tentative value *T_LNTbed_sim* and the bed temperature phase delay *rQexh.*

In the DPF entrance temperature deviation operation block B34, the ECU 15 calculates a deviation manifested by the predicted temperature relative to the actual temperature based upon the predicted DPF entrance temperature value *T_DPFin_sim* and a DPF entrance temperature measurement value *T_DPFin_real* detected by the exhaust gas temperature sensor 20, and outputs the deviation thus calculated as the feedback correction value $\Delta T\_dev1_{(z-1)}$ to the LNT bed temperature predicting operation block B32.

In the LNT bed temperature predicting operation block B32, the ECU 15 corrects the predicted bed temperature tentative value *T_LNTbed_sim* based upon the feedback correction value $\Delta T\_dev1_{(z-1)}$ input thereto from the DPF entrance temperature deviation operation block B34 and thus calculates a highly accurate predicted bed temperature value *T_LNTbed_sim_current*. The predicted bed temperature tentative value *T_LNTbed_sim* is a predicted temperature value calculated based upon the post-injection amount *Qpost* and the excess air factor $\lambda$ related to the reducing agent that raises the bed temperature through oxidation reaction, whereas the predicted LNT bed temperature value *T_LNTbed_sim_current* is a value obtained by correcting the predicted bed temperature tentative value *T_LNTbed_sim* with the feedback correction value $\Delta T\_dev1_{(z-1)}$, calculated based upon the DPF entrance temperature measurement value *T_DPFin_real.*

The ECU 15 adopting the bed temperature calculation logic described above in conjunction with the LNT 11 is able to calculate the highly accurate predicted LNT bed temperature value *T_LNTbed_sim_current,* which has been corrected based upon the oxidation reaction heat attributable to the post-injection amount *Qpost* and the excess air factor $\lambda$, the predicted exhaust gas turbine exit temperature value *T_tcout,* its phase delay *rQexh* and the feedback correction value $\Delta T\_dev1_{(z-1)}$.

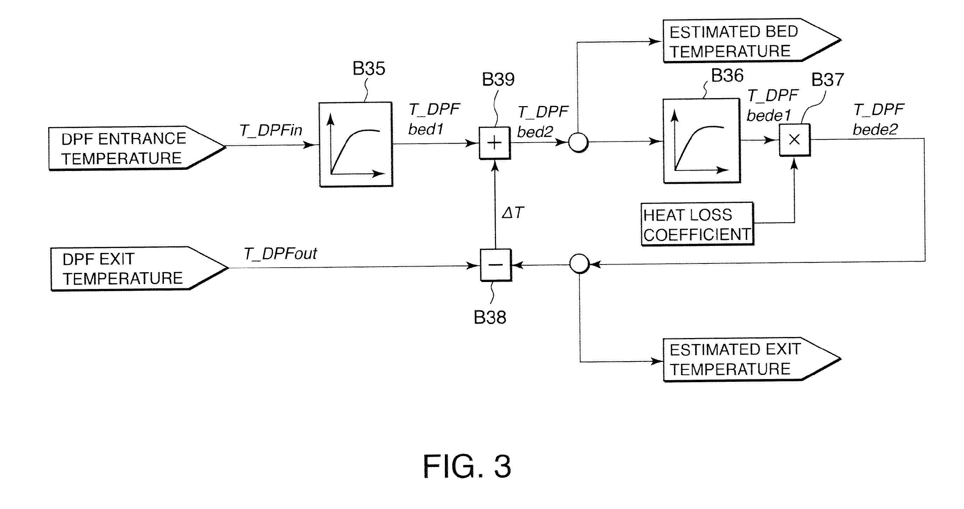

Referring to FIG. 3, a calculation logic adopted by the ECU 15 when calculating an estimated DPF bed temperature *T_DPFbed2* is described. Processing is executed based upon this calculation logic repeatedly over constant cycles, e.g., over 20-millisecond cycles.

As functional blocks related to this calculation logic, the ECU 15 includes weighted averaging blocks B35 and B36, a multiplication block B37, a subtraction block B38 and an additional block B39. It is to be noted that these blocks are all virtual units representing the various functions of the ECU 15 and they do not have any physical presence.

In the weighted averaging block B35, the ECU 15 calculates a tentative bed temperature $T\_DPFbed1$ for the DPF 12 as expressed in (1) below based upon the DPF entrance temperature $T\_DPFin$ detected by the exhaust gas temperature sensor 20.

$$T\_DPFbed1 = T\_DPFin \times K1 + T\_DPFbed1_{(z-1)} \times (1 - K1) \qquad (1)$$

where, K1 = weighted averaging coefficient, and
$T\_DPFbed1_{(z-1)}$ = tentative bed temperature calculated during a previous process execution.

In expression (1), a temperature that changes with a first order delay relative to the DPF entrance temperature $T\_DPFin$ is calculated as the tentative bed temperature $T\_DPFbed1$ for the DPF 12. $(z - 1)$ in expression (1) is an appendant indicating that the corresponding value has been obtained through the previous process execution.

The exhaust gas, having flowed in through the front side of the DPF 12 assuming the shape of a circular column, then flows downward through the DPF 12 along the axial direction and flows out through the rear side of the DPF 12. A bed temperature measured at a position close to the front side of the DPF 12 is closer to the DPF entrance temperature $T\_DPFin$, whereas a bed temperature measured at a position closer to the rear side of the DPF 12 is closer to a DPF exit temperature $T\_DPFout$. In other words, there is bound to be a certain degree of variance in the temperature of the DPF 12, for which the term "bed temperature" is used. Accordingly, a further definition is added to the term "bed temperature". Namely, the term is used to refer to the temperature measured at a maximum temperature location where the temperature rises to the highest level among various points of the DPF 12 in the area ranging from the front surface through the rear side. This particular location is present downstream relative to the center of the DPF 12 assumed along the axial direction.

The meaning of expression (1) is as follows.

Namely, as exhaust gas assuming a temperature $Tin$ is taken into the DPF 12 through the front side thereof, the bed temperature at the DPF 12 increases with a specific delay, instead of rising in steps to achieve that DPF entrance temperature $T\_DPFin$. More specifically, the bed temperature at the front side of the DPF 12 and the bed temperature at the maximum temperature location at the DPF 12 increase relative to the DPF entrance temperature $T\_DPFin$ with a delay manifesting in the bed temperature increase at the maximum temperature location, the extent of which corresponds to the heat capacity of the DPF 12 over the area between the front surface and the maximum temperature location. Expression (1), which approximates this delay as the first order delay, is equivalent to a physical model representing the temperature characteristics manifesting at the maximum temperature location. The weighted averaging coefficient $K1$ used for purposes of optimization in expression (1) is determined by the heat capacity at the DPF 12 over the area ranging from the front side of the DPF 12 through the maximum temperature location.

In the weighted averaging block B36, the ECU 15 calculates an estimated exit temperature $T\_DPFbede1$ for the DPF 12 as expressed in (2) below based upon the tentative bed temperature $T\_DPFbed1$ having been calculated for the DPF 12.

$$T\_DPFbede1 = T\_DPFbed1 \times K2 + T\_DPFbede1_{(z-1)} \times 1 - K2 \qquad (2)$$

where, K2 = weighted averaging coefficient, and
$T\_DPFbede1_{(z-1)}$ estimated exit temperature calculated during a previous process execution.

In expression (2), a temperature that changes with the first order delay relative to the tentative bed temperature $T\_DPFbed1$ is calculated as the estimated exit temperature $T\_DPFbede1$ for the DPF 12. The exit temperature at the DPF 12 changes relative to the change in the tentative bed temperature $T\_DPFbed1$ with a delay, the extent of which corresponds to the heat capacity of the DPF 12 over the area ranging from the maximum temperature location through the rear side of the DPF 12. Expression (2), which approximates this delay as the first order delay, is equivalent to a physical model representing the temperature characteristics manifesting at the rear side of the DPF 12. The weighted averaging coefficient $K2$ used for purposes of optimization in expression (2) is determined by the heat capacity at the DPF 12 over the area ranging from the maximum temperature location of the DPF 12 through the rear side.

In the multiplication block B37, the ECU 15 calculates an estimated exit temperature $T\_DPFbede2$ for the DPF 12 as expressed in (3) below.

$$T\_DPFbede2 = T\_DPFbede1 \times K3 \qquad (3)$$

where, K3 = heat loss coefficient of DPF 12.

The ambient temperature around the DPF 12 is the temperature of the outside air, and heat is released from the catalyst support at the DPF 12 assuming a high temperature into the outside air. Expression (3) reflects a phenomenon whereby the bed temperature is lowered by an extent corresponding to the heat transferred from the catalyst support of the DPF 12 to the outside air. The heat loss coefficient $K3$ in expression (3) is a variable that takes a positive value smaller than 1.0 and is adjusted by using the outside air temperature as a parameter. More heat is drawn away from the bed of the DPF 12 when the outside air temperature is lower. Accordingly, the heat loss coefficient $K3$ is set to a smaller value when the outside temperature is lower. The outside air temperature $THA$ used in the DPF entrance temperature predicting operation block B33 is also used as the outside air temperature in this operation.

In the subtraction block B8, the ECU 15 calculates a temperature difference $\Delta T$ as expressed in (4) below by subtracting the estimated exit temperature $T\_DPFbede2$ having been calculated for the DPF 12 in the multiplication block E 37 from an exit temperature $T\_DPFout$ at the DPF 12 detected by the exhaust gas temperature sensor 21.

$$\Delta T = T\_DPFout - T\_DPFbede2 \qquad (4)$$

If no particulates have accumulated at the DPF 12 and no oxidation catalyst is held at the catalyst support of the DPF 12, there will be no particulates to burn in the DPF 12. In addition, due to the absence of any oxidation catalyst, HC or CO in the exhaust gas will not become oxidized or burn. Under such circumstances, the estimated exit temperature $T\_DPFbede2$ of the DPF 12 should match the actual exit temperature $T\_DPFout$ at the DPF 12 detected by the exhaust gas temperature sensor 20 and the temperature difference $\Delta T$ calculated as expressed in (4) should be substantially equal to 0.

In reality, however, particulates having accumulated in the bed of the DPF 12 burn and HC and CO in the exhaust gas, too, burn through the catalytic reaction of the oxidation catalyst held at the catalyst support during the regeneration processing. This means that the estimated bed temperature must be recalculated by adding a sum $\Delta T = \Delta T1 + \Delta T2$, with $\Delta T1$ representing a first temperature increase attributable to the burning of the particulates at the bed of the DPF 12 and $\Delta T2$ representing a second temperature increase occurring as HC and CO in the exhaust gas react with the oxidation catalyst, to the tentative bed temperature $T\_DPFbed1.$

In the addition block B39, the ECU 15 calculates an estimated bed temperature $T\_DPFbed2$ as expressed in (5) by adding the temperature difference $\Delta T$ calculated as expressed in (4) to the tentative bed temperature $T\_DPFbed1$ initially calculated as an estimated bed temperature.

$$T\_DPFbed2 = T\_DPFbed1 + \Delta T \qquad (5)$$

In order to enable this calculation, $T\_DPFbed1$ on the right side of expression (2) needs to be substituted with a term that includes $T\_DPFbed2.$ Expression (2) can be rewritten as follows.

$$T\_DPFbede1 = T\_DPFbed2 \times K2 + T\_DPFbede1_{(z-1)} \times (1 - K2) \qquad (2a)$$

where, K2 = weighted averaging coefficient, and

$T\_DPFbede1_{(z-1)}$ = estimated exit temperature $T\_DPFbede1$ calculated during a previous process execution.

By calculating the temperature difference $\Delta T$ between the exit temperature $T\_DPFout$ at the DPF 12 and the estimated exit temperature $T\_DPFbede2$ calculated for the DPF 12 and feeding back the temperature difference $\Delta T$ so as to adjust the estimated bed temperature as described above, the estimated bed temperature can be calculated with a high degree of accuracy without requiring a huge volume of data for estimated bed temperature calculation. In addition, any degradation of the catalyst or heat deterioration at the DPF 12 attributable to an excessively high temperature can be averted as the DPF 12 undergoes regeneration processing.

The estimated bed temperature *T_DPFbed2* thus calculated represents the maximum bed temperature, i.e., the highest temperature at the bed. The ECU 15 executing the regeneration processing for the DPF 12 compares the estimated bed temperature *T_DPFbed2* with a DPF temperature limit. If the estimated bed temperature *T_DPFbed2* exceeds the DPF temperature limit, the ECU 15 lowers the bed temperature through, for instance, the following method. Namely, the burning temperature at the bed, which is dependent upon the oxygen concentration in the exhaust gas, rises to a higher level at a higher oxygen concentration level rather than at a lower oxygen concentration level in correspondence to a given quantity of particulates accumulated at the bed. Accordingly, if the estimated bed temperature *T_DPFbed2* exceeds the DPF temperature limit, the ECU lowers the oxygen concentration in the exhaust gas.

The oxygen concentration in the exhaust gas can be lowered either by decreasing the air intake quantity or by increasing the fuel injection quantity. The air intake quantity can be decreased by decreasing the degree of opening at the air intake throttle 7 or by increasing the degree of opening at the nozzle of the turbocharger 14. As an alternative, the air intake quantity may be lowered by increasing the degree of opening at the EGR valve 10 and thus increasing the EGR rate or the EGR quantity.

The predicted bed temperature tentative value *T_DPFbed1* is a predicted temperature value calculated on the premise that the DPF 12 is new based upon the post-injection amount *Qpost* and the excess air factor $\lambda$ pertaining to the reductant, which causes a bed temperature increase through oxidation reaction. The predicted bed temperature value *T_DPFbed2* is a highly accurate estimated bed temperature value calculated for the DPF 12 by correcting the initial value with the feedback correction value $\Delta T$ calculated based upon the actual exhaust gas temperature detected by the exhaust gas temperature sensor 21.

When the catalyst is highly active, e.g., when a new DPF 12 has just been installed, hardly any deviation will manifest between the predicted temperature value and the actual temperature value. However, as the DPF 12 is continuously used and becomes degraded, a bed temperature increase $\Delta T\_DPF$ at the DPF 12 under the rich spike control becomes gradually smaller and thus, the deviation of the predicted temperature value relative to the actual temperature value gradually increases.

As long as the temperature difference between the predicted bed temperature tentative value *T_DPFbed1* and the predicted bed temperature value *T_DPFbed2* resulting from the feedback correction is small, the extent of degradation of the DPF 12 can be determined to be small. If, on the other hand, the temperature difference is large, the extent of degradation of the DPF 12 can be determined to be large. As an alternative, the extent of degradation of the DPF 12 can be determined based upon the bed temperature increase $\Delta T\_DPF$ at the DPF 12 under a predetermined type of rich spike control.

Next, the rich spike control executed by the ECU 15 is described.

In order to scrub NOx trapped in the LNT 11, the ECU 15 engages the air intake throttle 7 in operation so as to enrich the mixed gas burned inside the internal combustion engine 1 until an initial target excess air factor $t\lambda1$, stored in the ROM in advance, is achieved and then controls the excess air factor of the exhaust gas so as to achieve a final target excess air factor $t\lambda2$ by executing post-injection via the fuel injector 4. In the description, the initial target excess air factor $t\lambda1$ will be referred to as a "target excess air factor to be achieved entirely through the operation of the air intake throttle 7 ", whereas the final target excess air factor $t\lambda2$ will be referred to as a "target excess air factor to be achieved through a combination of the operation of the air intake throttle 7 and fuel injection control executed for the fuel injector 4".

As the operating conditions of the internal combustion engine 1 change while such a rich spike operation is underway, the temperatures of the LNT 11 and the DPF 12 may increase differently in correspondence to a given final target excess air factor $t\lambda2$. In addition, the temperatures at the LNT 11 and the DPF 12 may increase differently in correspondence to a given final target excess air factor $t\lambda2$ if the control ratio with which the air intake throttle 7 and the post-injection need to be controlled in order to achieve the particular final target excess air factor $t\lambda2$ changes. If the temperature at the LNT 11 or the DPF 12 exceeds an upper limit following the execution of the rich spike operation, the efficiency with which the NOx is purified at the LNT 11 may become poorer or the DPF 12 may become degraded.

The ECU 15 monitors for any change occurring in the operating conditions while the rich spike operation is underway and for any change in the control ratio with which the air intake throttle 7 and the post-injection are controlled and serially calculates the extents to which the temperatures at the LNT 11 and the DPF 12 are to increase if the rich spike operation is continuously executed, so as to ensure that the temperatures at the LNT 11 and the DPF 12 do not exceed the upper limits during the rich spike operation. Based upon the extents of temperature increase having been calculated, the ECU 15 modifies the rich spike control so as to ensure that the temperatures at the LNT 11 and the DPF 12 do not exceed the upper limits.

The initial target excess air factor $t\lambda1$ to be achieved entirely through the operation of the air intake throttle 7 and the final target excess air factor $t\lambda2$ to be achieved through a combination of the operation of the air intake throttle 7 and post-injection under the rich spike control executed by the ECU 15 are set as described below in correspondence to the extents of degradation of the LNT 11 and the DPF 12.

The extent of degradation of the LNT 11 affects how the predicted LNT bed temperature value *T_LNTbed_sim_current* changes. The difference between the value calculated as the predicted LNT bed temperature value *T_LNTbed_sim_current* without rich spike control execution and the value calculated for the predicted LNT bed temperature value *T_LNTbed_sim_current* calculated under rich spike control is designated as an LNT bed temperature increase value $\Delta T\_LNT$.

When the catalyst is highly active, e.g., when a new LNT 11 has just been installed, the LNT bed temperature increase $\Delta T\_LNT$ takes a large value, and as the LNT 11 becomes degraded, the value of the LNT bed temperature increase $\Delta T\_LNT$ becomes smaller. The LNT bed temperature increase value $\Delta T\_LNT$ calculated under the rich spike control can thus be regarded as a parameter indicating the extent of degradation of the LNT 11.

Likewise, the DPF bed temperature increase $\Delta T\_DPF$ at the DPF 12 under the rich spike control can be regarded as a parameter indicating the extent of degradation of the DPF 12.

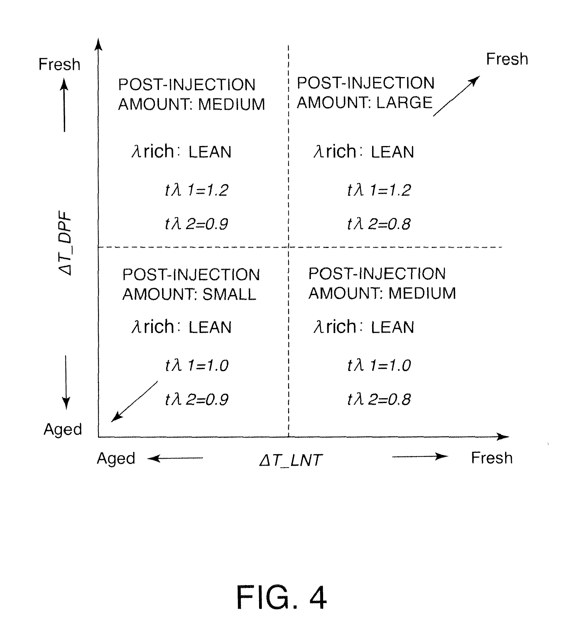

As shown in FIG. 4, the map of the initial target excess air factor *tλ1* and the final target excess air factor *tλ2*, stored in advance in the ROM at the ECU 15, is set with the LNT bed temperature increase value $\Delta T\_LNT$ and the DPF bed temperature increase value $\Delta T\_DPF$ are set as parameters thereof.

Under normal circumstances, as the air intake throttle 7 is constricted, the pump loss at the internal combustion engine 1 increases, which may lead to a decrease in the output of the internal combustion engine 1. If the fuel injection quantity *Qfin* is increased in order to counter the lowered output, the temperature of the exhaust gas will increase. Through the post-injection, fuel that will not contribute to combustion is injected after the main injection. The post-injection tends to lower the exhaust gas temperature.

When the extents of degradation of the LNT 11 and the DPF 12 are both low, i.e., in the upper right range in the figure in which the LNT bed temperature increase $\Delta T\_LNT$ and the DPF bed temperature increase $\Delta T\_DPF$ both take large values, the temperatures of both catalysts will increase readily. In this situation, the ECU 15 sustains a lean tendency for an extent of enrichment λ*rich* with the initial target excess air factor *tλ1* set at 1.2 and, at the same time, sets the final target excess air factor *tλ2* to 0.8 by assuming a large value for the post-injection amount Qpost so as to keep down the extents of temperature increase at the LNT 11 and the DPF 12. It is to be noted that the term "extent of enrichment λ*rich*" is used to refer to the extent of enrichment relative to the normal excess air factor assumed for a diesel engine. While the excess air factor 1.2 is richer than the excess air factor assumed in regular operation, the same value assumed for the degree of enrichment λ*rich* under rich spike control falls within a lean range.

When the extent of degradation of the LNT 11 is large but the extent of degradation of the DPF 12 is small, i.e., in the upper left range in the figure in which the LNT bed temperature increase $\Delta T\_LNT$ takes a small value and the DPF bed temperature increase $\Delta T\_DPF$ takes a large value, the temperature of the LNT 11 will not increase readily but the temperature of the DPF 12 will increase readily. In this situation, the ECU 15 sustains a lean tendency for the extent of enrichment λ*rich* with the initial target excess air factor *tλ1* set to 1.2 and sets the final target excess air factor *tλ2* to 0.9 by assuming an intermediate value for the post-injection amount *Qpost.* In other words, it deals with the advanced state of degradation at the LNT 11 by slightly lowering the extent of enrichment λ*rch* for the final target excess air factor *tλ2* under rich spike control so as to actively raise the temperature at the LNT 11 having become degraded to a significant extent.

When the extent of degradation of the LNT 11 is small but the extent of degradation of the DPF 12 is large, i.e., in the lower right range in the figure in which the LNT bed temperature increase $\Delta T\_LNT$ takes a large value and the DPF bed temperature increase $\Delta T\_DPF$ takes a small value, the temperature of the LNT 11 will increase readily but the temperature of the DPF 12 will not increase readily. In this situation, the ECU shifts to an enriching tendency for the extent of enrichment λ*rich* with the initial target excess air factor *tλ1* set to 1.0 and sets the final target excess air factor *tλ2* to 0.8 by assuming an intermediate value for the post-injection amount *Qpost.* In other words, it actively increases the temperature of the DPF 12 having become degraded to a significant extent by keeping the post-injection amount Qpost at an intermediate level and setting the initial target excess air factor *tλ1* to a value equivalent to the theoretical air/fuel ratio.

When the extents of degradation of the LNT 11 and the DPF 12 are both small, i.e., in the lower left range in the figure in which the LNT bed temperature increase $\Delta T\_LNT$ and the DPF bed temperature increase $\Delta T\_DPF$ both take small values, the temperatures of both catalysts will not increase readily. In this situation, the ECU 15 holds an enriching tendency for the extent of enrichment λ*rich* with the initial target excess air factor *tλ1* set to 1.0 and sets the final target excess air factor *tλ2* to 0.9 by assuming a small value for the post-injection amount *Qpost.* In contrast to the upper right range in the figure, in which the extents of degradation at the LNT 11 and the DPF 12 are both small, an enriching tendency is assumed for the extent of enrichment λ*rich* by constricting the air intake throttle 7 and a small value is assumed for the post-injection amount *Qpost* in this range so as to actively increase the temperatures at the LNT 11 and the DPF 12.

In the map shown in FIG. 4, the temperature increase $\Delta T\_LNT$ at the LNT 11 and the temperature increase $\Delta T\_DPF$ at the DPF 12 occurring under the rich spike control described above are set as parameters based upon which the extents of degradation of the catalysts are determined. The ECU 15 executes rich spike control so as to achieve the initial target excess air factor $t\lambda 1$ and the final target excess air factor $t\lambda 2$ determined in correspondence to these parameters.

Under this control, a stable temperature increase operation can be executed in order to regenerate the LNT 11 and the DPF 12 by eliminating any adverse effect attributable to the degradation of the catalysts.

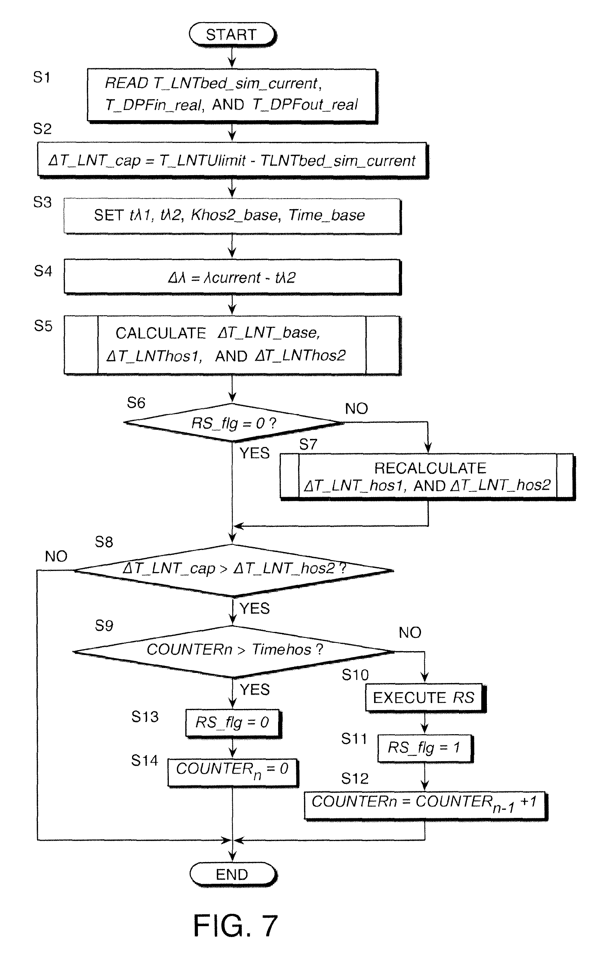

Referring to FIG. 7, the rich spike control routine executed by the ECU 15 to achieve the control described above is explained. This routine is repeatedly executed over predetermined cycles, e.g., over 20-millisecond cycles, while the internal combustion engine 1 is engaged in operation.

In this routine, the ECU 15 predicts the extents to which the temperatures of the LNT 11 and the DPF 12 will rise under rich spike control executed in conjunction with the initial target excess air factor $t\lambda 1$ to be achieved entirely through the operation of the air intake throttle 7 and the final target excess air factor $t\lambda 2$ to be achieved through a combination of the operation of the air intake throttle 7 and a post-injection. The initial target excess air factor $t\lambda 1$ and the final target excess air factor $t\lambda 2$ are values determined in correspondence to the extents of degradation of the LNT 11 and the DPF 12.

In more specific terms, while the rich spike control is underway, the ECU 15 calculates a temperature increase margin $\Delta T\_LNT$ indicating the extent to which the temperature of the LNT 11 may be allowed to increase relative to the temperature upper limit at which the LNT 11 is able to sustain good purification characteristics. The ECU 15 adjusts the values taken for the rich spike control parameters so as to ensure that the temperature increase at the LNT 11 does not exceed the range defined by the margin $\Delta T\_LNT$. For instance, the ECU 15 may alter the control ratio of the air intake throttle 7 and the post-injection by altering the value of the initial target excess air factor $t\lambda 1$ without altering the final target excess air factor $t\lambda 2$.

In a step S1, the ECU 15 reads the predicted LNT bed temperature value $T\_LNTbed\_sim\_current$, the DPF entrance temperature $T\_DPFin\_real$ and the DPF exit temperature $T\_DPFout\_real$.

The predicted LNT bed temperature value $T\_LNTbed\_sim\_current$ is the value having been calculated by using the predicted bed temperature value calculation logic in FIG. 2 adopted for the LNT 11.

The detection data provided by the exhaust gas temperature sensors 20 and 31 are respectively used as the DPF entrance temperature $T\_DPFin\_real$ and the DPF exit temperature $T\_DPFout\_real$.

In a step S2, the ECU 15 calculates the temperature range within which the bed temperature at the LNT 11 is allowed to increase, i.e., an LNT temperature increase margin $\Delta T\_LNT\_cap$ that allows the LNT 11 to sustain good purification characteristics, based upon the temperature difference between a bed temperature upper limit $T\_LNTUlimit$ at which good purification characteristics can be maintained at the LNT 11 and a predicted LNT bed temperature value $T\_LNTbed\_sim\_current$.

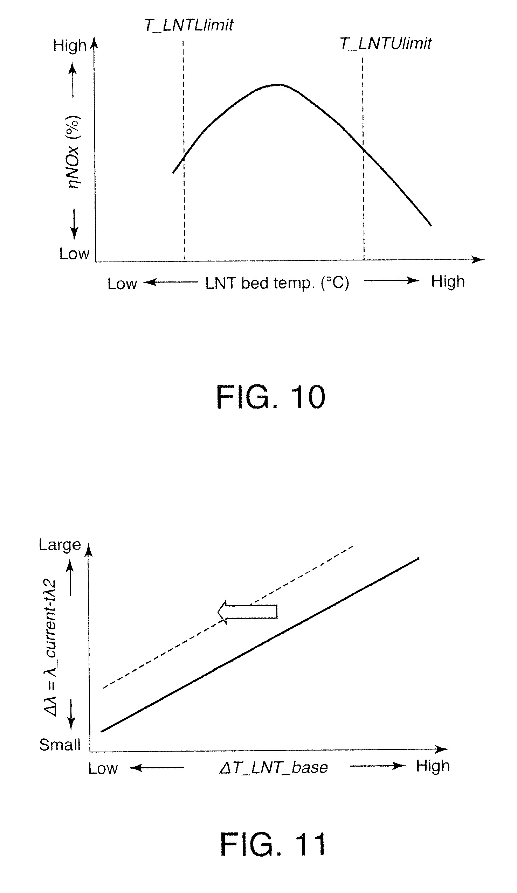

FIG. 10 indicates that the NOx purification rate $\eta NOx$ at the LNT 11 increases as the bed temperature further increases relative to a temperature lower limit $T\_LNTLlimit$ and achieves the highest NOx purification rate at a specific temperature. As the bed temperature further rises beyond the specific temperature level, the NOx purification rate gradually decreases. Then, once the bed temperature exceeds the temperature upper limit $T\_LNTUlimit$, the purification rate becomes lower than the lower limit of the allowable range.

The LNT temperature increase *margin $\Delta T\_LNT\_cap$* is calculated for the LNT 11 by subtracting the current predicted LNT bed temperature value $T\_LNTbed\_sim\_current$ from the temperature upper limit $T\_LNTUlimit$. Namely, it is calculated as expressed in (6) below.

$$\Delta T\_LNT\_cap = T\_LNTUlimit - T\_LNTbed\_sim\_current \qquad (6)$$

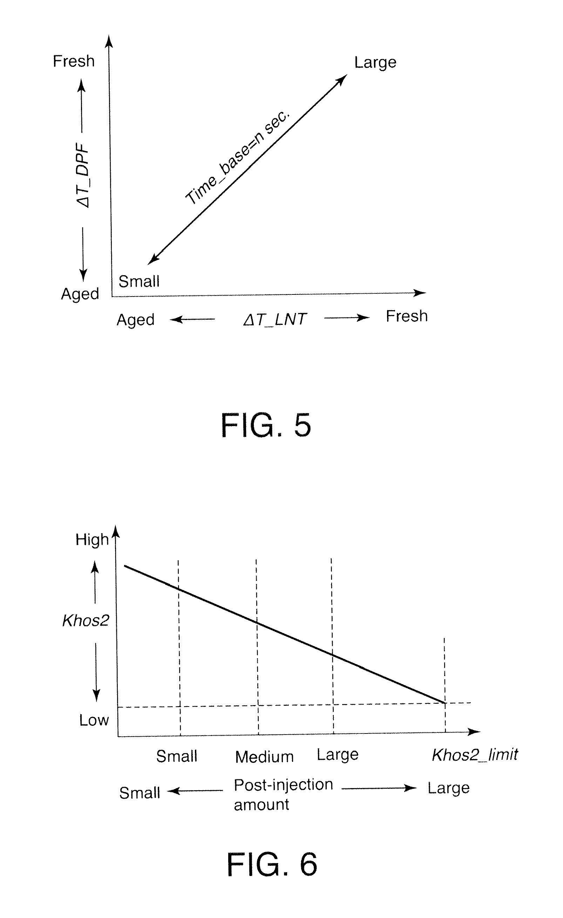

In a step S3, the ECU 15 reads a rich spike condition base value. The rich spike condition base value can be determined by referencing the map of the initial target excess air factor $t\lambda 1$ and the final target excess air factor $t\lambda 2$, the characteristics of which are indicated in FIG. 4, a map of a post-correction coefficient base value $Khos2\_base$ calculated for the LNT 11 in correspondence to the post-injection amount $Qpost$, the characteristics of which are indicated in FIG. 5, and a map of a reference rich spike time period $Time\_base$, the characteristics of which are indicated in FIG. 6. These maps are stored in advance into the ROM at the ECU 15.

The extent of temperature increase at the LNT 11 can be determined based upon the final target excess air factor $t\lambda 2$ under the rich spike control, the post-correction coefficient base value $Khos2\_base$ indicating the control ratio of the control for the air intake throttle 7 and the post-injection amount control under the rich spike control, which is required to achieve the final target excess air factor $t\lambda 2$, and the reference rich spike time period $Time\_base$.

The extent of temperature increase at the LNT 11 is affected by the control ratio of control for the air intake throttle 7 and the post-injection amount control. The post-correction coefficient base value $Khos2\_base$, indicating this control ratio, is used for the following reason.

The ECU 11 determines a reference temperature increase extent for the LNT 11 based upon the final target excess air factor $t\lambda2$ under the rich spike control. The reference temperature increase extent ascertained for the LNT 11 is equivalent to the extent of temperature increase occurring under rich spike control executed in conjunction with the operation of the air intake throttle 7 alone. When post-injection is executed in combination with the operation of the air intake throttle 7, the extent of temperature increase is determined by correcting the reference temperature increase extent for the LNT 11 in correspondence to the ratio of the post-injection to the operation of the air intake throttle 7.

In the map of the initial target excess air factor $t\lambda1$ and the final target excess air factor $t\lambda2$ in FIG. 4, the bed temperature increase at the LNT 11 and the bed temperature increase at the DPF 12 are both set so as to remain substantially constant without being affected by the extents of degradation of the individual catalysts.

The ECU 15 determines a target excess air factor base value $t\lambda1$ to be achieved entirely through the operation of the air intake throttle 7 and a final target excess air factor base value $t\lambda2$ to be achieved through a combination of the operation of the air intake throttle 7 and post-injection under the rich spike control executed in correspondence to the LNT bed temperature increase $\Delta T\_LNT$ and the DPF bed temperature increase $\Delta T\_DPF,$ occurring through a single rich spike control session, by referencing the characteristics map in FIG. 4.

In addition, the ECU 15 determines the post-correction coefficient base value *Khos2_base* for the LNT temperature, which corresponds to the post-injection amount, by referencing the characteristics map in FIG. 5. This map is set in advance in correspondence to the post-injection amount base value set in the map shown in FIG. 4 so that the post-correction coefficient base value *Khos2_base* takes a smaller value when the post-injection amount is larger and that the post-correction coefficient base value *Khos2_base* takes an increasingly large value as the post-injection amount decreases from a high level to an intermediate level and from an intermediate level to a low level.

The ECU 15 determines the reference rich spike time period *Time_base* based upon the LNT bed temperature increase $\Delta T\_LNT$ and the DPF bed temperature increase $\Delta T\_DPF$ occurring through a single rich spike control session by referencing the characteristics map in FIG. 6.

In the map, the reference rich spike time period *Time_base* is set in advance so as to change together with the LNT bed temperature increase $\Delta T\_LNT$ and the DPF bed temperature increase $\Delta T\_DPF$ occurring as the rich spike control is executed. Namely, when the LNT bed temperature increase $\Delta T\_LNT$ and the DPF bed temperature increase $\Delta T\_DPF$ both take large values, the reference rich spike time period *Time_base* also takes a large value, whereas when the LNT bed temperature increase $\Delta T\_LNT$ and the DPF bed temperature increase $\Delta T\_DPF$ both take small values, the reference rich spike time period *Time_base* also takes a small value.

In a step S4, the ECU 15 calculates the difference between the current excess air factor and the final target excess air factor $t\lambda2$ under the rich spike control, i.e., the excess air factor change rate. The excess air factor change rate $\Delta\lambda$ is calculated by subtracting the final target excess air factor $t\lambda2$ to be achieved through the operation of the air intake throttle 7 and a post-injection from the actually measured excess air factor value $\lambda$ current.

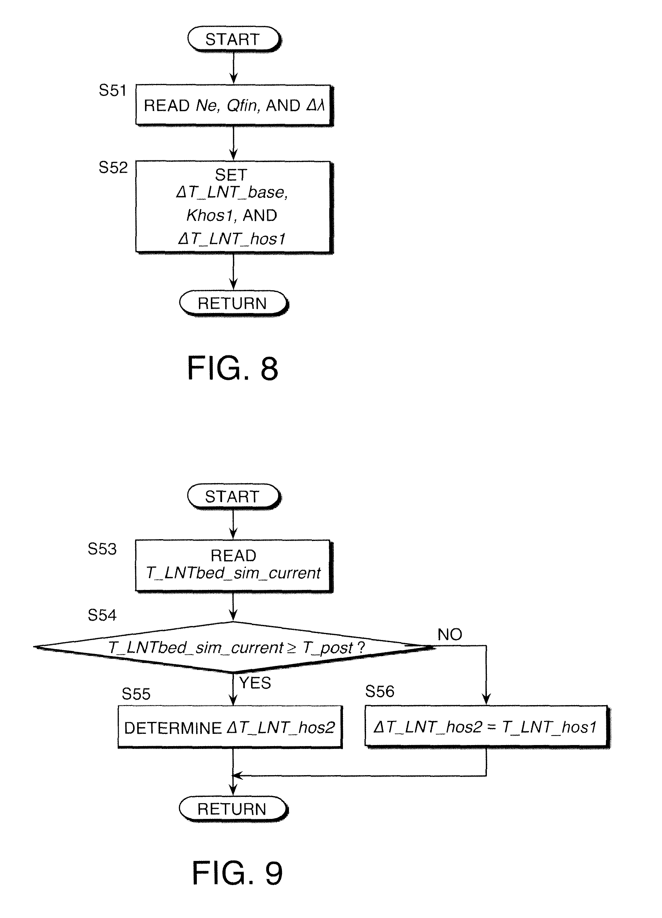

In a step S5, the ECU 15 calculates a reference temperature increase value $\Delta T\_LNT\_base$ for the LNT 11, an LNT operating condition correction temperature increase value $\Delta T\_LNThos1$ that factors in the operating conditions and a post-correction temperature increase value $\Delta T\_LNThas2$ that factors in the post-injection under the rich spike condition having been determined through the step S3 and the step S4 by sequentially executing the subroutine shown in FIG. 8 and the subroutine shown in FIG. 9.

In a step S51 in FIG. 8, the ECU 15 reads the excess air factor change rate $\Delta\lambda$ having been determined in the step S4, the rotation speed *Ne* of the internal combustion engine 1 and the fuel injection quantity *Qfin* at which the fuel is injected via the fuel injector 4.

In a step S52, the ECU 15 sets the reference LNT temperature increase value $\Delta T\_LNT\_base$, a correction coefficient *Khos1* corresponding to the operating conditions of the internal combustion engine 1 and the LNT operating condition correction temperature increase value $\Delta T\_LNThos1$ individually as described below.

The reference LNT temperature increase value $\Delta T\_LNT\_base$ can be determined based upon the excess air factor change rate $\Delta\lambda$ having been determined in the step S4 by referencing a map stored in advance in the ROM, the characteristics of which are indicated in FIG. 11.

FIG. 11 indicates that the reference LNT temperature increase value $\Delta T\_LNT\_base$ under the rich spike control executed in conjunction with the excess air factor change rate $\Delta\lambda$ achieved exclusively through the operation of the air intake throttle 7 over the entire span of the reference rich spike time period *Time_base* having been determined through the step S3, can be determined by using the excess air factor change rate $\Delta\lambda$ as a parameter. This map, created in advance based upon test results, is stored in the ROM at the ECU 15.

The ECU 15 determines the reference LNT temperature increase value $\Delta T\_LNT\_base$ in correspondence to the excess air factor change rate $\Delta\lambda$ by referencing the map.

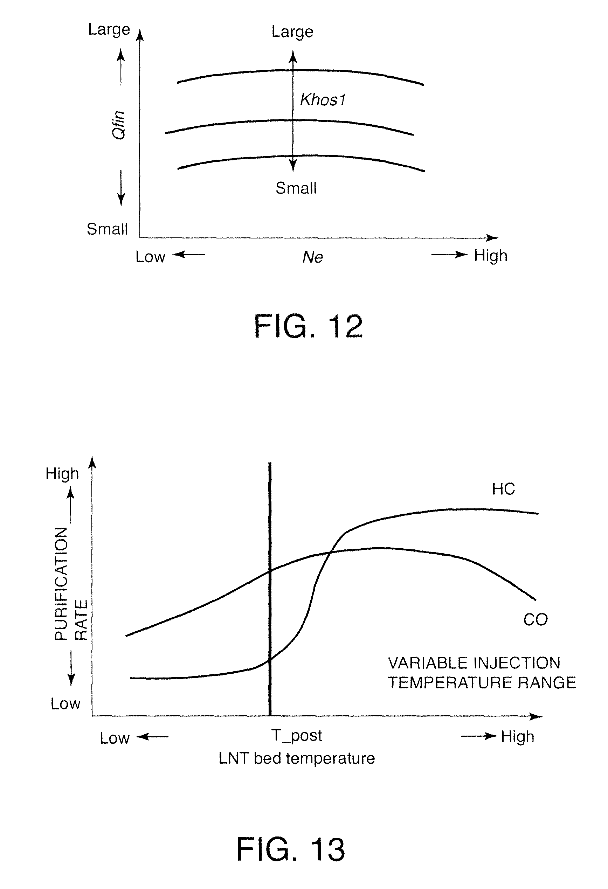

Next, the ECU 15 determines the operating condition correction coefficient *Khos1*, to be used to correct the reference LNT temperature increase value $\Delta T\_LNT\_base$, based upon the operating conditions of the internal combustion engine 1 by referencing a map stored in advance in the ROM, the characteristics of which are indicated in FIG. 12. The operating conditions of the internal combustion engine 1 referenced in this operation are the rotation speed *Ne* of the internal combustion engine 1 and the fuel injection quantity *Qfin*. In the map, the operating condition correction coefficient *Khos1*, which is particularly dependent upon the fuel injection quantity *Qfin*, is set so that it takes a larger value in a high load state, in which the fuel injection quantity *Qfin* is large, and that it takes a smaller value in a partial load state in which the fuel injection quantity *Qfin* is relatively small.

Next, the ECU 15 calculates the LNT operating condition correction temperature increase value $\Delta T\_LNThos1$.

The LNT operating condition correction temperature increase value $\Delta T\_LNThos1$ is calculated as expressed in (7) below in correspondence to the reference LNT temperature increase value $\Delta T\_LNT\_base$ and the operating condition correction coefficient *Khos1*, which is dependent upon the operating conditions of the internal combustion engine 1.

$$\Delta T\_LNThos1 = \Delta T\_LNT\_base \times Khos1 \qquad (7)$$

The LNT operating condition correction temperature increase value $\Delta T\_LNThos1$ is calculated by taking into consideration the extent of temperature increase at the LNT 11, which changes depending upon the operating conditions under the rich spike control.

Once the processing in the step S52 is completed, the ECU 15 ends the subroutine.

Next, the ECU 15 executes the subroutine shown in FIG. 9 so as to calculate the post-correction temperature increase value $\Delta T\_LNThos2$ by factoring in the post-injection.

Through the post-injection, fuel, which will not contribute to combustion, is injected after the main injection. The fuel injected through the post-injection will not be fully gasified and the purification rates for the HC and the CO in the exhaust gas, achieved via the LNT 11, will be lowered, if the temperature at the LNT 11 is equal to or lower than a predetermined post-injection permitting catalyst temperature *T_post.*

For this reason, the post-injection is only permitted if the temperature of the LNT 11 is equal to or higher than the predetermined post-injection permitting catalyst temperature *T_post*. The ECU 15 determines the post-injection permitting catalyst temperature *T_post* by referencing a map stored in advance in the ROM, the characteristics of which are indicated in FIG. 13. In this map, the post-injection permitting catalyst temperature *T_post* is set in a range over which oxidation reaction is allowed to occur even if liquid HC in an unburned state is supplied to the LNT 11. The post-injection permitting catalyst temperature *T_post* is set higher than the temperature lower limit *T_LNTLlimit* set for the LNT 11, as shown in FIG. 10.

In a step S53 in FIG. 9, the ECU 15 reads the predicted LNT bed temperature value *T_LNTbed_sim_current*.

In a step S54, the ECU 15 determines whether or not the predicted LNT bed temperature value *T_LNTbed_sim_current* is equal to or higher than the post-injection permitting catalyst temperature *T_post*.

If a negative determination is made in the step S54, the ECU 15 sets the LNT operating condition correction temperature increase value $\Delta T\_LNThos1$ equal to the post-correction temperature increase value $\Delta T\_LNThos2$ pertaining to the LNT bed temperature in a step S56 so as to achieve the target excess air factor *tλ2* entirely through the operation of the air intake throttle 7 without executing post-injection.

More specifically, the ECU 15 sets the LNT bed temperature correction coefficient *Khos2* to 1 and sets the target excess air factor *tλ1* to be achieved through the operation of the air intake throttle 7 equal to the target excess air factor *tλ2* to be achieved through a combination of the operation of the air intake throttle 7 and post-injection. These settings mean that the target excess air factor *tλ2* is to be achieved through the operation of the air intake throttle 7 alone. The ECU 15 determines the post-correction temperature increase value $\Delta T\_LNThos2$ for the LNT bed temperature as expressed in (8) below.

$$\Delta T\_LNThos2 = \Delta T\_LNThos1 \qquad (8)$$

In this situation, the temperature of the LNT 11 is low enough and thus, even if the operation of the air intake throttle 7 alone is controlled in order to achieve the target excess air factor *tλ2*, the likelihood of the bed temperature at the LNT 11 rising beyond the upper limit remains low.

If, on the other hand, an affirmative determination is made in the step S54, the ECU 15 sets the post-correction temperature increase value $\Delta T\_LNThos2$ for the LNT bed temperature in a step S55 by correcting the LNT operating condition correction temperature increase value $\Delta T\_LNThos1$ in correspondence to the post-injection amount.

In more specific terms, if the predicted LNT bed temperature value *T_LNTbed_sim_current* is equal to or higher than the post-injection permitting catalyst temperature *T_post*, post-injection is executed by referencing the maps in FIGS. 4 and 5. In this situation, the ECU 15 sets an LNT temperature correction value *Khos2_base*, which corresponds to the reference post-injection amount, as the post-correction coefficient *Khos2* for the LNT bed temperature.

The ECU 15 determines the post-correction temperature increase value $\Delta T\_LNThos2$ for the LNT bed temperature as expressed in below by multiplying the LNT operating condition correction temperature increase value $\Delta T\_LNThos1$ by the post-correction coefficient *Khos2* set in relation to the LNT bed temperature.

$$\Delta T\_ LNThos2 = \Delta T\_ LNThos1 \times Khos2 \qquad (9)$$

Following the processing executed in the step S55 or the step S56, the ECU 15 ends the subroutine.

In a step S6 in FIG. 7, the ECU 15 determines whether or not a rich spike control start flag *RS_frg* is currently set to 0.

If the rich spike control start flag *RS_frg* is currently set to 0, the ECU 15 executes the processing in a step S8. However, if the rich spike control start flag *RS_frg* is not set to 0, the ECU 15 recalculates the LNT operating condition correction temperature increase value $\Delta T\_LNThos1$ and the post-correction temperature increase value $\Delta T\_LNThos2$ for the LNT bed temperature in a step S7.

The recalculation is executed in the step S7 so as to adjust the post-correction temperature increase value $\Delta T\_LNThos2$ for the LNT bed temperature, currently taking a value equal to or larger than the LNT temperature increase margin $\Delta T\_LNT\_cap$, to a value under the LNT temperature increase margin $\Delta T\_LNT\_cap$. Thus, if the post-correction temperature increase value $\Delta T\_LNThos2$ calculated for the LNT bed temperature is already lower than the LNT temperature increase margin $\Delta T\_LNT\_cap$, the ECU 15 skips the processing in the step S7 and directly proceeds to execute the processing in the step S8.

In this recalculation, the target excess air factor $t\lambda1$ to be achieved entirely through the operation of the air intake throttle 7 and the target excess air factor $t\lambda2$ to be achieved through a combination of the operation of the air intake throttle 7 and the post-injection are not altered, so as to reduce the length of time required for the rich spike control operation.

In the map of the reference rich spike time period *Time_base* in FIG. 6, the reference rich spike time period *Time_base* is set in correspondence to the bed temperature increase $\Delta T\_LNT$ at the LNT 11 and the bed temperature increase $\Delta T\_DPF$ at the DPF 12, achieved through a single session of rich spike control. Namely, the reference rich spike time period *Time_base* is set to a large value when the bed temperature increase $\Delta T\_LNT$ at the LNT 11 and the bed temperature increase $\Delta T\_DPF$ at the DPF 12 both take large values, but the reference rich spike time period *Time_base* is set to a small value when the bed temperature increase $\Delta T\_LNT$ at the LNT 11 and the bed temperature increase $\Delta T\_DPF$ at the DPF 12 both take small values.

If the post-correction temperature increase value $\Delta T\_LNThos2$ calculated for the LNT bed temperature is equal to or above the LNT temperature increase margin $\Delta T\_LNT\_cap$, the ECU 15 sets a rich spike time period *Timehos* that is shorter than the reference rich spike time period *Time_base* by a predetermined length of time, e.g., by one second, and then calculates the LNT operating condition correction temperature increase value $\Delta T\_LNThos1$ and the post-correction temperature increase value $\Delta T LNThos2$ that correspond to the rich spike time period *Timehos*.

FIG. 11 indicates that if the rich spike time period *Timehos* is shortened by one second while sustaining a given excess air factor change rate $\Delta\lambda = \lambda\_current - t\lambda2$, the reference LNT temperature increase value $\Delta T\_LNT base$ represented by the solid line in the figure is reduced to assume the value indicated by the dotted line in the figure. The ECU 15 calculates the reference LNT temperature increase value $\Delta T\_LNT\_base$ based upon the excess air factor change rate $\Delta\lambda$ having been determined in the step S4 in conformance the dotted line in the figure.

The ECU 15 sets the product obtained by multiplying the reference LNT temperature increase value $\Delta T\_LNT\_base$ by the correction coefficient *Khos1* described earlier as a new LNT operating condition correction temperature increase value $\Delta T\_LNThos1$. In addition, it sets the product obtained by multiplying the LNT operating condition correction temperature increase value $\Delta T\_LNThos1$ thus reset by the post-correction coefficient *Khos2* described earlier as new a post-correction temperature increase value $\Delta T\_LNThos2$ for the LNT bed temperature.

The ECU 15 repeatedly resets the post-correction temperature increase value $\Delta T\_LNThos2$ for the LNT bed temperature by reducing the rich spike time period *Timehos* by one second at a time as described above until the post-correction temperature increase value $\Delta T\_LNThos2$ for the LNT bed temperature becomes lower than the LNT temperature increase margin $\Delta T\_LNT\_cap$. Once the post-correction temperature increase value $\Delta T\_LNThos2$ for the LNT bed temperature becomes lower than the LNT temperature increase margin $\Delta T\_LNT\_cap$, the ECU 15 ends the processing in the step S7 and proceeds to execute the processing in the step S8.

In the step S8, the ECU 15 determines whether or not the post-correction temperature increase value $\Delta T\_LNThos1$ currently set for the LNT bed temperature is below the LNT temperature increase margin $\Delta T\_LNT\_cap$. As long as the processing in the step S8 is executed immediately after the step S7, an affirmative determination will be made in this step. If a negative determination is made in the step S8, i.e., if the post-correction temperature increase value $\Delta T\_LNThos2$ set for the LNT bed temperature is equal to or above the LNT temperature increase margin $\Delta T\_LNT\_cap$, the ECU 15 ends the routine without executing a rich spike operation.

Upon making an affirmative determination in the step S8, the ECU 15 makes a determination in a step S9 as to whether or not a time count at a rich spike counter COUNTERn has exceeded the preset rich spike time period *Timehos* or the reference rich spike time period *Time_base.* The time count on the rich spike counter COUNTERn is compared with the rich spike time period *Timehos* if the ECU 15 has proceeded to the step S9 after executing the processing in the step S7 and is compared with the reference rich spike time period *Time_base* if the ECU has proceeded to the step S9 without executing the processing in step S7. If a negative determination is made, the ECU 15 executes the processing in steps S10 through S12.

In the step S10, the ECU 15 executes the rich spike control.

In the step S11, the ECU 15 sets the rich spike control start flag *RS_frg* to 1.

In the step S12, the ECU 15 increments the rich spike counter COUNTERn. Once the processing in the step S12 is executed, the ECU 15 ends the routine.

Under the rich spike control executed from the step S10 through the step S12, a first enriching process, through which the excess air factor is shifted toward enrichment by lowering the excess air factor to the initial target excess air factor $t\lambda 1$, to be achieved through the operation of the air intake throttle 7, assuming a level falling within a desorption range within which NOx is desorbed from the LNT 11, and a second enriching process through which the excess air factor is shifted toward enrichment by further lowering the excess air factor from the initial target excess air factor $t\lambda 1$ to the final target excess air factor $t\lambda 2$ so as to reduce the NOx having been desorbed through the first enriching process, are executed.

When a request for regenerating the LNT 11 is generated, the ECU 15 first executes the first enriching process with the execution of the second enriching process disallowed until the excess air factor is determined to have been adjusted to the first target excess air factor $t\lambda 1$ through the first enriching process. Upon determining that the initial target excess air factor $t\lambda 1$ has been achieved, the ECU 15 executes the second enriching process.

After making an affirmative determination in the step S8, the ECU 15 executes the processing in a step S13 and the processing in a step S14. This processing is equivalent to the process of the rich spike operation.

In the step S 13, the ECU 15 resets the rich spike control start flag *RS_frg* to 0.

In the step S14, the ECU 15 resets the rich spike counter COUNTERn. Once the processing in the step S 14 is completed, the ECU 15 ends the routine.

Under normal circumstances, the desorption of NOx from the LNT 11 starts at a time point at which the excess air factor $\lambda$ assumes a predetermined value. When the excess air factor $\lambda$ is immediately shifted toward enrichment under the rich spike control whereby the fuel is injected from the fuel injector 4 through post-injection during an expansion stroke phase of the internal combustion engine 1, the reductant may be supplied in excess before the NOx is fully desorbed from the LNT 11. In such a case, only part of the supplied reductant will be used for purposes of NOx desorption but the remaining reductant, which is not used for NOx regeneration, will be released to the outside atmosphere, giving rise to a concern that the HC in the exhaust gas may increase.

When enriching the excess air factor $\lambda$ by restricting the air intake through an operation of the air intake throttle 7, a greater quantity of smoke may be generated as the excess air factor becomes lower.

The exhaust gas purification device according to this invention first enriches the excess air factor $\lambda$ simply through the operation of the air intake throttle 7 as soon as a request for regenerating the LNT 11 is generated and the excess air factor $\lambda$ is not enriched through post-injection of fuel until the excess air factor $\lambda$ becomes equal to the initial target excess air factor $t\lambda 1$. Then, only after the initial target excess air factor $t\lambda 1$ is achieved, fuel is injected through post-injection. Through the first enriching process, the excess air factor $\lambda$ is enriched so as to achieve a state in which NOx is desorbed from the LNT 11 and subsequently, control is executed so as to further enrich the excess air factor $\lambda$ from the initial target excess air factor $t\lambda 1$ to the final target excess air factor $t\lambda 2$ through post-injection of fuel. As a result, rich spike control can be executed so as to desorb the NOx and reduce the desorbed NOx with a high level of efficiency without compromising exhaust performance.

In addition, the exhaust gas purification device according to this invention executes the rich spike control routine so as to keep down the bed temperature at the LNT 11 to a level under the temperature upper limit $T\_LNTUlimit.$ The post-correction temperature increase value $\Delta T\_LNThos2$ is calculated in the routine by reflecting the LNT operating condition correction temperature increase value $\Delta T\_LNThos1$ calculated by incorporating the correction coefficient *Khos1* determined in correspondence to the operating conditions of the internal combustion engine 1. Thus, even if the operating conditions of the internal combustion engine 1, such as the fuel injection quantity, abruptly change immediately after the rich spike control starts, the bed temperature increase value for the LNT 11 can be calculated with a high level of accuracy while the rich spike execution is underway. Consequently, the purification rate $\eta NOx$ at the LNT 11 can be sustained at a satisfactory level and the quantity of NOx passing through the LNT 11 to be released into the outside atmosphere via the exhaust pipe 8 can be reduced.

Next, a second embodiment of this invention, which pertains to the recalculation of the LNT operating condition correction temperature increase value $\Delta T\_LNThos1$ and the post-correction temperature increase value $\Delta T\_LNThos2$ for the LNT bed temperature, executed in the step S7, is described.

In this embodiment, the ECU 15 resets the LNT operating condition correction temperature increase value $\Delta T\_LNThos1$ and the post-correction temperature increase value $\Delta T\_LNThos2$ for the LNT bed temperature under rich spike control by modifying at least either the initial target excess air factor $t\lambda1$ or the final target excess air factor $t\lambda2$.

The ECU 15 resets the post-injection amount to the maximum value without altering, for instance, the final target excess air factor $t\lambda2$ to be achieved through the operation of the air intake throttle 7 and post-injection and the rich spike time period *Timehos.* As the post-injection amount is increased, the initial target excess air factor $t\lambda1$ to be achieved through the operation of the air intake throttle 7 alone, is reset toward the lean side. By resetting the target excess air factor $t\lambda1$ to be achieved through the operation of the air intake throttle 7 further toward the lean side as described above, an increase in the exhaust gas temperature can be deterred. In addition, by setting the post-injection amount to the maximum value, any increase in the temperature at the LNT 11 can be more effectively deterred. The degree of opening of the air intake throttle 7, the post-injection amount and the rich spike time period assumed in this situation will be referred to as first rich spike conditions.

FIG. 5 indicates that as the post-injection amount is adjusted to the maximum value, the post-correction coefficient *Khos2* for the LNT bed temperature is set equal to a minimum value *Khos2*_limit. Since the post-correction coefficient *Khos2,* by which the LNT operating condition correction temperature increase value $\Delta T\_LNThos1$ is multiplied, takes the minimum value *Khos2*_limit, the post-correction temperature increase value $\Delta T\_LNThos2$ decreases.

If the post-correction temperature increase value $\Delta T\_LNThos2$ reset for the LNT bed temperature as described above is below the LNT temperature increase margin $\Delta T\_LNT\_cap$, the current session of rich spike control is executed under the first rich spike conditions.

Under the first rich spike conditions, with the post-injection amount set to the maximum value, the temperature at the LNT 11 may rise by a significant extent depending upon the state of the gradation of the LNT 11. The ECU 15 monitors the LNT exit temperature $\Delta T\_LNTout$ at the LNT 11 detected by the exhaust gas temperature sensor 19 and suspends the rich spike control executed under the first rich spike conditions if the bed temperature at the LNT 11, which is estimated in correspondence to the LNT exit temperature $\Delta T\_LNTout$, exceeds the temperature upper limit $T\_LNTU$-*limit.*

In addition, if the post-correction temperature increase occurring in the LNT bed temperature does not decrease to a level equal to or below the LNT temperature increase margin $\Delta T\_LNT\_cap$ under the first rich spike conditions, the ECU 15 executes rich spike control under second rich spike conditions outlined below.

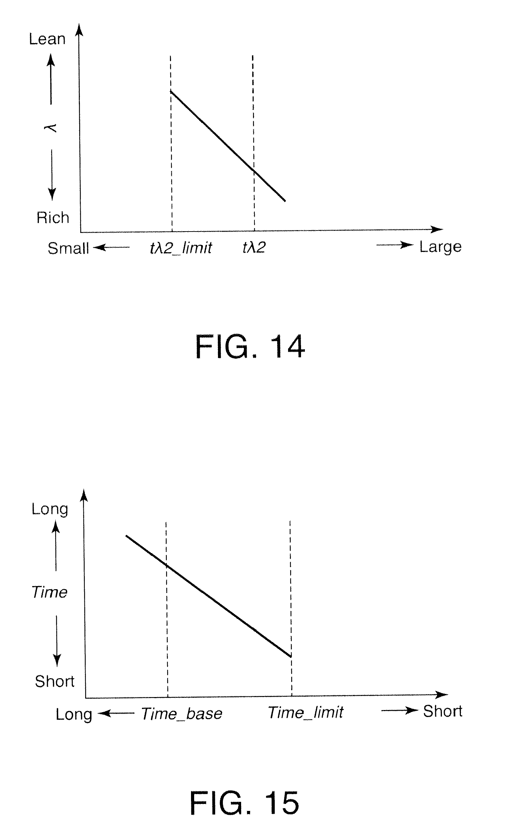

In order to achieve the second rich spike conditions, the ECU 15 resets the final target excess air factor $t\lambda2$, to be achieved through the operation of the air intake throttle 7 and the post-injection, to a minimum value $t\lambda2$_limit indicated in FIG. 14 in conjunction with the first rich spike conditions. With the final target excess air factor $t\lambda2$ thus reset, the initial target excess air factor $t\lambda1$ to be achieved entirely through operation of the air intake throttle 7 is reset toward the lean side. As a result, the excess air factor change rate $\Delta\lambda = \lambda\_current - tA2$ decreases and the reference LNT increase value $\Delta T\_LNT\_base$ calculated by referencing the map in FIG. 11, too, decreases.

Such a decrease in the reference LNT temperature increase value $\Delta T\_LNT\_base$ leads to a decrease in the LNT operating condition correction temperature increase value $\Delta T\_LNThos1$ calculated as; $\Delta T\_LNThos1 - \Delta T\_LNT\_base \times Khos1$. This, in turn, causes a decrease in the post-correction temperature increase value $\Delta T\_LNThos2$ calculated for the LNT bed temperature by multiplying the LNT operating condition correction temperature increase value $\Delta T\_LNThos1$ by the post temperature correction coefficient *Khos2.* By resetting the initial target excess air factor $t\lambda1$ to be achieved entirely through the operation of the air intake throttle 7 toward the lean side and then resetting the final target excess air factor $t\lambda2$ to be achieved through a combination of the operation of the air intake throttle 7 and post-injection toward the lean side as described above, any temperature increase at the LNT 11 can be even more effectively deterred compared to the temperature increase deterrence achieved under the first rich spike conditions. The degree of opening of the air intake throttle 7, the post-injection amount and the rich spike time period assumed under these circumstances will be referred to as the second rich spike conditions.

If the post-correction temperature increase $\Delta T\_LNThos2$ in the LNT bed temperature can be reduced to a value equal to or below the LNT temperature increase margin $\Delta T\_LNT\_cap$ under the second rich spike conditions, the ECU 15 executes rich spike control under the second rich spike conditions. However, if the post-correction temperature increase $\Delta T\_LNThos2$ in the LNT bed temperature cannot be reduced to a value equal to or below the LNT temperature increase margin $\Delta T\_LNT\_cap$ under the second rich spike conditions, the ECU 15 executes rich spike control under third rich spike conditions outlined below.

In order to achieve the third rich spike conditions, the ECU 15 sets the post-injection amount to the maximum value and sets the final target excess air factor $t\lambda2$, to be achieved through the operation of the air intake throttle 7 and the post-injection, equal to the minimum value $t\lambda2$_limit.

In addition, the ECU 15 shortens the rich spike time period *Timehos* by a specific extent so that the rich spike time period *Timehos* becomes closer to a minimum value *Time_limit* indicated in FIG. 15. As the rich spike time period *Timehos* is shortened, the reference LNT temperature increase $\Delta T\_LNT\_base$ attributable to the reaction heat, relative to the excess air factor change rate $\Delta\lambda = \lambda\_current - tA2$ is shifted to assume the lowest value in FIG. 11. The reference LNT temperature increase value $\Delta T\_LNT\_base$ determined by referencing this map, too, is further reduced and thus, the LNT operating condition correction temperature increase value $\Delta T\_LNThos1$, calculated as; $\Delta T\_LNThos1 = \Delta T\_LNT\_base \times Khos1$, is further reduced. As a result, the post-correction temperature increase value $\Delta T\_LNThos2$ calculated for the LNT bed temperature by multiplying the LNT operating condition correction temperature increase value $\Delta T\_LNThos1$ by the post temperature correction coefficient *Khos2*, is further reduced. In addition, as the rich spike time period *Timehos* is shortened, an increase in the temperature at the LNT 11 is even more effectively deterred. The degree of opening of the air intake throttle 7, the post-injection amount and the rich spike time period assumed in this situation will be referred to as the third rich spike conditions.

If the post-correction temperature increase $\Delta T\_LNThos2$ in the LNT bed temperature can be reduced to a value equal to or below the LNT temperature increase margin $\Delta T\_LNT\_cap$ under the third rich spike conditions, the ECU 15 executes rich spike control under the third rich spike conditions. If, on the other hand, the post-correction temperature increase $\Delta T\_LNThos2$ in the LNT bed temperature cannot be reduced to a value equal to or below the LNT temperature increase margin $\Delta T\_LNT\_cap$ under the third rich spike conditions, the ECU 15 further shortens the rich spike time period *Timehos* by the predetermined extent, closer to the minimum value *Time_limit* indicated in FIG. 15.

Through this embodiment, any increase in the bed temperature at the LNT 11 under the rich spike control beyond the temperature upper limit *T_LNTUlimit* can be prevented by executing the rich spike control under the rich spike conditions that are adjusted through the process described above. In this embodiment, too, the post-correction temperature increase value $\Delta T\_LNThos2$ is calculated by reflecting the value of the LNT operating condition correction temperature increase $\Delta T\_LNThos1$ calculated with a correction coefficient *Khos1* determined in correspondence to the operating conditions of the internal combustion engine 1, incorporated therein. Thus, even if the operating conditions of the internal combustion engine 1, such as the fuel injection quantity, abruptly change immediately after the rich spike control starts, the bed temperature increase value for the LNT 11 can be calculated with a high level of accuracy while the rich spike execution is underway. Consequently, the purification rate η*NOx* at the LNT 11 can be sustained at a satisfactory level and the quantity of NOx passing through the LNT 11 to be released into the atmosphere via the exhaust pipe 8 can be reduced.

In addition, at least either the initial target excess air factor *tλ1* or the final target excess air factor *tλ2* is set as a rich spike execution condition in correspondence to the bed temperature increase $\Delta T\_DPF$ at the DPF 12 and the bed temperature increase $\Delta T\_LNT$ at the LNT 11 occurring while the rich spike operation is underway in this embodiment. This means that at least either the initial target excess air factor *tλ1* or the final target excess air factor *tλ2* is set in correspondence to the extents to which the catalysts at the LNT 11 and the DPF 12 have become degraded. As a result, the temperatures of the catalysts can be controlled without being affected by the extent of degradation of the catalysts in the embodiment.

An altering means for altering catalyst regeneration control parameters may be configured as described below in another embodiment.

A post-correction temperature increase value $\Delta T\_LNThos2$ pertaining to the LNT bed temperature may exceed the LNT temperature increase margin $\Delta T\_LNT\_cap$ due to, for instance, a change in the operating conditions of the internal combustion engine 1. The initial target excess air factor *tλ1* to be achieved entirely through the operation of the air intake throttle 7, the final target excess air factor *tλ2* to be achieved through a combination of the operation of the air intake throttle 7 and the post-injection and a rich spike time period *Timehols* are designated as catalysts regeneration control parameters. A map optimizing these three parameters for the temperature excess; $\Delta T\_LNThos2 - \Delta T\_LNT\_cap$ so as to eliminate the temperature excess $\Delta T\_LNThos2 - \Delta T\_LNT\_cap$, is created by conducting tests. The ECU 15 stores this map into the ROM in advance and if the temperature excess $\Delta T\_LNThos2 - \Delta T\_LNT\_cap$ is greater than 0, the ECU alters the initial target excess air factor *tλ1*, the final target excess air factor *tλ2* and the rich spike time period *Timehos* by referencing the map based upon the temperature excess $\Delta T\_LNThos2 - \Delta T\_LNT\_cap$.

The contents of Tokugan 2009-236022, with a filing date of October 13, 2009 in Japan, are hereby incorporated by reference.

Although the invention has been described above with reference to certain embodiments, the invention is not limited to the embodiments described above. Modifications and variations of the embodiments described above will occur to those skilled in the art, within the scope of the claims.

INDUSTRIAL FIELD OF APPLICATION

According to the invention described above, the NOx trap catalyst regeneration temperature can be sustained at an optimal level even as the operating conditions of the internal combustion engine change. Thus, this invention is expected to engender particularly desirable advantages when adopted in an exhaust gas purification device for an internal combustion engine installed in a vehicle and which is therefore, likely to be subjected to frequent changes in operating conditions.

The embodiments of this invention in which an exclusive property or privilege is claimed are defined as follows:

**Claims**

1. A regenerating device that regenerates an exhaust gas purification material (11) used to trap a specific component included in an exhaust gas from an internal combustion engine (1), comprising:

   an excess air factor altering mechanism (4, 7) that alters an excess air factor ($\lambda$) at the internal combustion engine (1), the exhaust gas purification material (11) being regenerated by desorbing the specific component in response to a change in the excess air factor ($\lambda$);
   an operating condition detection sensor (22, 23) that detects an operating condition of the internal combustion engine (1); and
   a programmable controller (15) programmed to;
   control the excess air factor altering means (4, 7) based upon a control parameter ($t\lambda 1$, $t\lambda 2$) to regenerate the exhaust gas purification material (11) (S10);
   calculate a predicted temperature increase ($\Delta T\_LNThos2$) at the exhaust gas purification material (11) undergoing regeneration based upon the operating condition of the internal combustion engine and the control parameter ($t\lambda 1$, $t\lambda 2$) (S7);
   determine if the predicted temperature increase ($\Delta T\_LNThos2$) is beyond a preset allowable range ($\Delta T\_LNT\_cap$) (S8); and
   alter a value of the control parameter ($t\lambda 1$, $t\lambda 2$) if the predicted temperature increase ($\Delta T\_LNThos2$) is beyond the allowable range ($\Delta T\_LNT\_cap$) (S7).

2. The regenerating device as defined in claim 1, wherein the internal combustion engine (1) is a diesel engine, and the exhaust gas purification material (11) is constituted with a nitrogen oxide trap catalyst that traps nitrogen oxides in the exhaust gas and is regenerated by desorbing the trapped nitrogen oxide through rich spike control, under which the excess air factor ($\lambda$) is temporarily reduced.

3. The regenerating device as defined in claim 2, wherein the internal combustion engine (1) comprises an air intake throttle (7) and a fuel injector (4), the excess air factor altering mechanism (4, 7) comprises the air intake throttle (7) and the fuel injector (4), and the control parameter ($t\lambda 1$, $t\lambda 2$) includes an initial target excess air factor ($t\lambda 1$) under the rich spike control, which is set so as to be achieved entirely through control of the air intake throttle (7), and a final target excess air factor ($t\lambda 2$) under the rich spike control, which is set so as to be achieved through control of the air intake throttle (7) and fuel injection control for the fuel injector (4).

4. The regenerating device as defined in claim 3, wherein the controller (15) is further programmed to:

   cause the initial target excess air factor ($t\lambda 1$) and the final target excess air factor ($t\lambda 2$) to take smaller values as an extent by which the predicted temperature increase ($\Delta T\_LNThos2$) exceeds the allowable range ($\Delta T\_LNT\_cap$) becomes smaller (S7).

5. The regenerating device as defined in claim 4, wherein the controller (15) is further programmed to:

   set a rich spike execution period (*Timehos*) to a smaller value as an extent of degradation of the nitrogen oxide trap catalyst becomes greater; and
   alter the initial target excess air factor ($t\lambda 1$) and the final target excess air factor ($t\lambda 2$) in response to the length of the rich spike execution period (S7).

6. The regenerating device as defined in claim 5, wherein the controller (15) is further programmed to:

   set the initial target excess air factor ($t\lambda 1$) and the final target excess air factor ($t\lambda 2$) to smaller values as the length of the rich spike execution period (*Timehos*) becomes smaller (S7).

7. The regenerating device as defined in claim 6, wherein the controller (15) is further programmed to:

correct the initial target excess air factor ($t\lambda1$) and the final target excess air factor ($t\lambda2$) to smaller values by shortening the rich spike execution period (*Timehos*) (S7).

8. The regenerating device as defined in any one of claim 5 through claim 7, wherein the extent of degradation of the nitrogen oxide trap catalyst is determined in advance based upon a temperature difference ($\Delta T\_LNT$) between a temperature of the nitrogen oxide trap catalyst under the rich spike control and the temperature of the nitrogen oxide trap catalyst without rich spike control.

9. The regenerating device as defined in any one of claim 3 through claim 8, wherein the fuel injection control for the fuel injector (4) is achieved by controlling a fuel injection amount at the fuel injector (4) which does not contribute to combustion.

10. The regenerating device as defined in claim 9, wherein the fuel injection control for the fuel injector (4) is achieved by controlling a post-injection amount and the controller (15) is further programmed to:

   set the post-injection amount to a predetermined maximum value and perform a first alteration of control parameter value, in which the initial target excess air factor ($t\lambda1$) is increased in response to the post-injection amount without altering the final target excess air factor ($t\lambda2$) (S7), when the predicted temperature increase is beyond the allowable range.

11. The regenerating device as defined in claim 10, wherein the controller (15) is further programmed to:

   recalculate the predicted temperature increase at the exhaust gas purification material (11) based upon the operating condition of the internal combustion engine (1) and the value set for the control parameter ($t\lambda1$, $t\lambda2$) as a result of the first alteration of control parameter value; and
   set the final target excess air factor ($t\lambda2$) to a predetermined minimum value and perform a second alteration of control parameter value, in which the initial target axis air factor ($t\lambda1$) is increased in response to the final target excess air factor ($t\lambda2$) (S7), when the recalculated predicted temperature increase is still beyond the preset allowable range.

12. The regenerating device as defined in claim 11, wherein the controller (15) is further programmed to:

   recalculate the predicted temperature increase at the exhaust gas purification material (11) undergoing the regeneration based upon the operating condition of the internal combustion engine (1) and the value set for the control parameter ($t\lambda1$, $t\lambda2$) as a result of the second alteration of control parameter value;
   reduce the length of the rich spike execution period and recalculate the predicted temperature increase at the exhaust gas purification material (11) undergoing the regeneration using a reduced length of the rich spike execution period; and
   repeatedly reduce the length of the rich spike execution period when the recalculated predicted temperature increase is still beyond the preset allowable range, until the predicted temperature increase falls within the preset allowable range (S7).

13. The regenerating device as defined in any one of claim 1 through claim 10, wherein the operating condition detection sensor comprises a sensor (23) that detects a rotation speed of the internal combustion engine (1) and a sensor (22) that detects an air intake amount.

14. A regenerating device that regenerates an exhaust gas purification material (11) used to trap a specific component included in an exhaust gas from an internal combustion engine (1), comprising:

   excess air factor altering means (4, 7) for altering an excess air factor ($\lambda$) at the internal combustion engine (1), the exhaust gas purification material (11) being regenerated by desorbing the specific component in response to a change in the excess air factor ($\lambda$);
   operating condition detection means (22, 23) for detecting an operating condition of the internal combustion engine (1);
   means (4, 7) for controlling the excess air factor altering means (4, 7) based upon a control parameter ($t\lambda1$, $t\lambda2$) to regenerate the exhaust gas purification material (11) (S10);
   means (15) for calculating a predicted temperature increase ($\Delta T\_LNThos2$) at the exhaust gas purification material (11) undergoing regeneration based upon the operating condition of the internal combustion engine (1) and the control parameter (*t*λ1, *t*λ2) (S7);
means (15) for determining if the predicted temperature increase (Δ*T*_ *LNThos2*) is beyond a preset allowable range (Δ_*LNT_cap*) (S8); and
means (15) for altering a value of the control parameter (*t*λ1, *t*λ2) when the predicted temperature increase (Δ*T*_*LNThos2*) is beyond the allowable range (Δ*T*_*LNT_cap*) (S7).

15. A regenerating method that regenerates an exhaust gas purification material (11) used to trap a specific component included in an exhaust gas from an internal combustion engine (1), comprising:

altering an excess air factor (λ) at the internal combustion engine (1), the exhaust gas purification material (11) being regenerated by desorbing the specific component in response to a change in the excess air factor (λ);
detecting an operating condition of the internal combustion engine (1);
controlling the excess air factor altering means (4, 7) based upon a control parameter (*t*λ1, *t*λ2) to regenerate the exhaust gas purification material (11) (S10);
calculating a predicted temperature increase (Δ*T*_*LNThos2*) at the exhaust gas purification material (11) undergoing regeneration based upon the operating condition of the internal combustion engine (1) and the control parameter (*t*λ1, *t*λ2) (S7);
determining if the predicted temperature increase (Δ*T*_*LNThos2*) is beyond a preset allowable range (Δ*T*_*LNT_cap*) (S8); and
altering a value of the control parameter (*t*λ1, *t*λ2) when the predicted temperature increase (Δ*T*_ *LNThos2*) is beyond the allowable range (Δ*T*_*LNT_cap*) (S7),

FIG. 1

6 INTERCOOLER
13 DIFFERENTIAL PRESSURE SENSOR
16 EXCESS AIR FACTOR SENSOR
17-21 EXHAUST GAS TEMPERATURE SENSOR
22 AIR FLOW METER

12 ENGINE ROTATION SPEED SENSOR
24 PRESSURE SENSOR
25 VEHICLE SPEED SENSOR
26 OUTSIDE AIR TEMPERATURE SENSOR

FIG. 2

FIG. 3

EP 2 489 863 A1

Fresh

Fresh

$\Delta T\_DPF$

POST-INJECTION
AMOUNT: MEDIUM

$\lambda$rich: LEAN

$t\lambda 1=1.2$

$t\lambda 2=0.9$

POST-INJECTION
AMOUNT: LARGE

$\lambda$rich: LEAN

$t\lambda 1=1.2$

$t\lambda 2=0.8$

POST-INJECTION
AMOUNT: SMALL

$\lambda$rich: LEAN

$t\lambda 1=1.0$

$t\lambda 2=0.9$

POST-INJECTION
AMOUNT: MEDIUM

$\lambda$rich: LEAN

$t\lambda 1=1.0$

$t\lambda 2=0.8$

Aged

Aged

$\Delta T\_LNT$

Fresh

## FIG. 4

## FIG. 5

## FIG. 6

**START**

S1 — READ T_LNTbed_sim_current, T_DPFin_real, AND T_DPFout_real

S2 — $\Delta T\_LNT\_cap = T\_LNTUlimit - TLNTbed\_sim\_current$

S3 — SET $t\lambda 1, t\lambda 2, Khos2\_base, Time\_base$

S4 — $\Delta\lambda = \lambda current - t\lambda 2$

S5 — CALCULATE $\Delta T\_LNT\_base, \Delta T\_LNThos1,$ AND $\Delta T\_LNThos2$

S6 — $RS\_flg = 0$ ? — NO → S7 — RECALCULATE $\Delta T\_LNT\_hos1,$ AND $\Delta T\_LNT\_hos2$

S6 — YES

S8 — $\Delta T\_LNT\_cap > \Delta T\_LNT\_hos2$ ? — NO

S8 — YES

S9 — $COUNTERn > Timehos$ ? — NO → S10 — EXECUTE $RS$ → S11 — $RS\_flg = 1$ → S12 — $COUNTERn = COUNTER_{n-1} +1$

S9 — YES

S13 — $RS\_flg = 0$

S14 — $COUNTER_n = 0$

**END**

# FIG. 7

```
        ( START )
           │
           ▼
S51   ┌──────────────────────┐
      │ READ Ne, Qfin, AND Δλ │
      └──────────────────────┘
           │
           ▼
S52   ┌──────────────────────┐
      │         SET          │
      │    ΔT_LNT_base,      │
      │     Khos1, AND       │
      │     ΔT_LNT_hos1      │
      └──────────────────────┘
           │
           ▼
       ( RETURN )
```

# FIG. 8

```
                    ( START )
                       │
                       ▼
S53   ┌──────────────────────────┐
      │          READ            │
      │   T_LNTbed_sim_current   │
      └──────────────────────────┘
                       │
                       ▼
S54              ◇───────────────◇                         NO
         ◇  T_LNTbed_sim_current ≥ T_post ?  ◇───────────────┐
                 ◇───────────────◇                           │
                       │ YES                                 │
S55   ┌────────────────▼──────────┐   S56   ┌────────────────▼──────────┐
      │ DETERMINE ΔT_LNT_hos2    │         │ ΔT_LNT_hos2 = T_LNT_hos1 │
      └──────────────────────────┘         └───────────────────────────┘
                       │                                     │
                       ◄─────────────────────────────────────┘
                       ▼
                  ( RETURN )
```

# FIG. 9

FIG. 10

FIG. 11

FIG. 12

FIG. 13

FIG. 14

FIG. 15

## INTERNATIONAL SEARCH REPORT

| International application No. |
|---|
| PCT/JP2010/067861 |

A. CLASSIFICATION OF SUBJECT MATTER
*F02D41/04*(2006.01)i, *B01D53/94*(2006.01)i, *F01N3/02*(2006.01)i, *F01N3/24* (2006.01)i, *F02D43/00*(2006.01)i

According to International Patent Classification (IPC) or to both national classification and IPC

B. FIELDS SEARCHED

Minimum documentation searched (classification system followed by classification symbols)
F02D41/04, B01D53/94, F01N3/02, F01N3/24, F02D43/00

Documentation searched other than minimum documentation to the extent that such documents are included in the fields searched
Jitsuyo Shinan Koho 1922-1996 Jitsuyo Shinan Toroku Koho 1996-2010
Kokai Jitsuyo Shinan Koho 1971-2010 Toroku Jitsuyo Shinan Koho 1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2005-48751 A (Nissan Motor Co., Ltd.),<br>24 February 2005 (24.02.2005),<br>paragraphs [0005] to [0007], [0028]<br>& US 2005/0039444 A1 & EP 1496236 A2 | 1-9,13-15<br>10-12 |
| Y<br>A | JP 2009-197735 A (Toyota Motor Corp.),<br>03 September 2009 (03.09.2009),<br>paragraph [0033]; fig. 3<br>(Family: none) | 1-9,13-15<br>10-12 |
| Y<br>A | JP 2009-46994 A (Toyota Motor Corp.),<br>05 March 2009 (05.03.2009),<br>paragraphs [0050] to [0051]<br>(Family: none) | 1-9,13-15<br>10-12 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08 November, 2010 (08.11.10) | Date of mailing of the international search report<br>16 November, 2010 (16.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/067861

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 2009-162163 A  (Honda Motor Co., Ltd.),<br>23 July 2009 (23.07.2009),<br>paragraph [0004]<br>(Family: none) | 4-9<br>1-3,10-15 |

Form PCT/ISA/210 (continuation of second sheet) (July 2009)

**REFERENCES CITED IN THE DESCRIPTION**

**Patent documents cited in the description**

- JP 2002479074 A
- JP TOKUGAN2009236022 B